# EUROPÄISCHE PATENTSCHRIFT

(11) **EP 4 188 581 B1**
(45) Veröffentlichungstag und Bekanntmachung des Hinweises auf die Patenterteilung: **29.04.2026**
(21) Anmeldenummer: 21758607.2
(22) Anmeldetag: 27.07.2021
(51) Int. Cl.: B01D 46/52

(54) **FILTERELEMENT UND VERFAHREN ZUM HERSTELLEN EINES FILTERELEMENTS**
FILTER ELEMENT AND METHOD FOR PRODUCING A FILTER ELEMENT
ELÉMENT FILTRANT ET PROCÉDÉ DE FABRICATION D'UN ÉLÉMENT FILTRANT

(30) Priorität: 31.07.2020 DE 102020120248
(43) Veröffentlichungstag der Anmeldung: 07.06.2023
(73) Patentinhaber: MANN+HUMMEL GmbH, 71636 Ludwigsburg (DE)
(72) Erfinder: HORIYE, Adriano, 71634 Ludwigsburg (DE); MÜLLER, Thilo, 71277 Rutesheim (DE); EPLI, Sven, 74078 Heilbronn (DE); SCHMID, Daniel, 74343 Sachsenheim (DE); BECK, Andreas, 74366 Kirchheim (DE)
(74) Vertreter: Mann + Hummel Intellectual Property
(86) Internationale Anmeldenummer: PCT/EP2021/070919
(87) Internationale Veröffentlichungsnummer: WO 2022/023301

(56) Entgegenhaltungen:
- DE-A1- 102014 015 905
- DE-A1- 19 737 954
- DE-A1- 19 749 598
- GB-A- 2 020 995
- US-A1- 2015 113 929

## Beschreibung

### Technisches Gebiet

Die vorliegende Erfindung betrifft ein Filterelement zum Filtern eines Fluids, insbesondere zum Filtern von Verbrennungsluft in einem Kraftfahrzeug und/oder zum Filtern von Betriebsmitteln eines Kraftfahrzeugs, sowie ein Verfahren zum Herstellen eines solchen Filterelements.

### Stand der Technik

Die DE 10 2014 015 905 A offenbart ein Flachfilterelement mit einem Filterbalg aus einem Filtermedium, das entlang von Faltkanten zickzackförmig gefaltet ist. Die Faltkanten erstrecken sich jeweils zwischen gegenüberliegenden Stirnkanten des Filterbalges. Auf Faltkanten des Faltenbalges sind gerade neben den Stirnkanten verlaufende Stützleimraupen aufgebracht, welche benachbarte Falten verbinden und den Filterbalg stabilisieren und dadurch eine Abdichtung zwischen Rohluftraum und Reinluftraum bewirken. Beispielsweise bei Innenraumluftfiltern kann das Filterelement weiter ein oder mehrere Stabilisierungselemente umfassen, insbesondere Seitenbänder und/oder Kopfbänder (auch als Stirnbänder bezeichnet), welche das Filtermedium zumindest abschnittsweise stabilisieren, um dessen Form, insbesondere im Filterbetrieb, aufrechtzuerhalten. Die Stabilisierungselemente können insbesondere einen geschlossenen oder offenen Rahmen - auch materialeinstückig - ausbilden, welcher das Filtermedium umgibt. Nachteilig an dem Flachfilterelement gemäß DE 10 2014 015 905 A ist, dass die im Bereich der Stirnkanten liegenden Bereiche nicht genutzt werden können oder eine separate Abdichtung durch ein Seitenband oder ähnliches notwendig ist.

Die GB 2 352 195 A beschreibt einen HEPA-Rundfilter aus Glasfaserpapier. Es sind zwei konzentrische Verklebungen mit Hilfe von Klebstoffraupen zur Stabilisierung des zylindrischen Faltenbalgs vorgesehen, wobei die innere Klebstoffraupe dünner ist als die äußere.

Die EP 0 645 170 B1 beschreibt ein Verfahren zur Herstellung eines plattenförmigen Filtereinsatzes, bestehend aus einem zickzackförmig gefalteten Filtermittel, wobei in einem ersten Arbeitsschritt Knickkanten geprägt werden. Anschließend werden mit Leimauftragsvorrichtungen, die mit Leimauftragsdüsen versehen sind, zwei Leimraupen auf die Oberfläche des Filtermittels aufgetragen werden. Danach wird die Faltung durchgeführt. Die Leimauftragsdüsen bewegen sich quer zu der Transportrichtung des Filtermaterials, wodurch zwei parallel verlaufende Leimraupen entstehen, während sich das Filtermaterial entlang der Transportrichtung bewegt. Eine Schneidvorrichtung trennt das gefaltete Filtermaterial quer zur Maschinenlaufrichtung in einzelne Filterelemente. Ferner erfolgt ein Durchtrennungsschnitt mit einer weiteren Schneidvorrichtung zwischen den parallel verlaufenden Leimraupen. Die beiden Leimraupen bilden jeweils eine fluiddichte Seite der beiden entstehenden Filterelemente.

Die DE 10 2020 047 894 A1 offenbart ein Filterelement, umfassend ein gefaltetes Filtermedium mit Faltentälern und Faltenwänden, wobei das Filtermedium aus einem Grundkörper besteht, wobei der Grundkörper eine Flanke aufweist, die durch ein Kunststoffverstärkungsteil verstärkt ist. Diese Flanke ist mit dem Verstärkungsteil verbunden, wobei das Kunststoffverstärkungsteil Faltentäler und Faltenwände des Filtermediums aufnimmt. Gemäß der DE 10 2020 047 894 A1 sind solche Kunststoffverstärkungen als Einsatzstücke ausgeführt, zwischen denen Falten eingeklemmt werden oder die stoffschlüssig mit den Faltenwänden verbunden werden. Als nachteilig könnten die bei der Herstellung des Filterelements notwendigen Steck- und Klebeschritte für die Einsatzstücke von beiden Seiten des Filtermediums in dessen gefalteten Zustand angesehen werden.

Aus GB 2 020 995 A ist ein zylindrisches Filterelement mit einem Faltenbalg bekannt. Der Faltenbalg wird hergestellt, indem auf einen flachen Filterbalg Schmelzkleberlinien mittels beweglicher Düsen aufgetragen werden, wonach das mit Schmelzkleber versehene Material zugeschnitten und in eine zylindrische Form gebracht wird. Die Schmelzkleberlinien, die die Faltenflanken und Faltenkämme verbinden, können dabei sowohl auf der Innenseite als auch auf der Außenseite des Filterkörpers angeordnet sein.

Darüber hinaus offenbart DE 197 49 598 A1 die Verstärkung eines Faltenfilters mittels eines Schmelzkleberauftrags, wobei innerhalb des Schmelzklebers eine Faserverstärkung vorgesehen ist. Der Schmelzkleber wird zusammenhängend über die Faltenkanten aufgebracht, wobei ein Teil des Klebers auf die Faltenflanken läuft.

Ein weiterer gattungsgemäßer Filter ist aus US 2015/113929 A1 bekannt.

Darüber hinaus offenbart DE 197 37 954 A1 einen weiteren zylindrischen Filter mit Faltenbalg. Neben senkrecht zur Faltung verlaufenden Schmelzkleberaufträgen sind dort Schmelzkleberlinien offenbart, die wendelartig verlaufen.

Schließlich offenbart DE 10 2014 015 905 A1 ein Flachfilterelement für Fluide, insbesondere einer Brennkraftmaschine, insbesondere eines Kraftfahrzeugs, ein Verfahren und eine Vorrichtung zur Herstellung eines solchen. Das Flachfilterelement weist einen Filterbalg aus einem Filtermedium auf, das entlang von Faltkanten zickzackförmig gefaltet ist. Die Faltkanten erstrecken sich jeweils zwischen gegenüberliegenden Stirnkanten des Filterbalges. Auf gegenüberliegenden Stirnseiten des Filterbalges ist jeweils eine Stirnfalte mit einer Faltkante und einem gegenüberliegenden freien Stirnrand angeordnet ist. Wenigstens eine der Stirnfalten ist entlang ihres Stirnrandes mittels einer Perforation (338) abgelängt.

### Offenbarung der Erfindung

Vor diesem Hintergrund liegt der vorliegenden Erfindung die Aufgabe zugrunde, ein verbessertes Filterelement, insbesondere ein aufwandsgünstig herstellbares Filterelement, zu schaffen.

Demgemäß wird ein Filterelement zum Filtern eines Fluids mit einem Faltenpack vorgeschlagen. Das Faltenpack ist aus einem zickzackförmig und/oder wellenförmig gefalteten Filtermedium mit durch Faltkanten begrenzten Faltabschnitten gebildet. Dabei sind mindestens zwei direkt benachbarte Faltabschnitte entlang einer Klebelinie durch eine Verklebung mit Hilfe eines Klebstoffmaterials miteinander verbunden. Die Klebelinie verläuft zumindest abschnittsweise schräg zu der zwischen den zwei direkt benachbarten Faltabschnitten liegenden Faltkante. Alternativ oder zusätzlich verläuft die Klebelinie zumindest abschnittsweise versetzt, in Richtung entlang der zwischen den zwei direkt benachbarten Faltabschnitten liegenden Faltkante.

Das Filterelement ist insbesondere zum Filtern von Verbrennungsluft in einem Kraftfahrzeug und/oder zum Filtern von Betriebsmitteln eines Kraftfahrzeugs, als Umgebungsluftfilter oder als fahrzeuggetragener oder stationärer Feinstaubfilter eingerichtet. In Ausführungsformen ist das Filterelement ein Luftfilter, in weiteren Ausführungsformen ist es als Innenraumluftfilter ausgebildet. Eine Ausführungsform ist auch für Flüssigkeitsfilter möglich. Bei einem Faltenpack aus zickzackförmig gefaltetem Filtermedium spricht man auch von einem Faltenbalg. Das Filtermedium wird auch als Filtermaterial bezeichnet.

Die Verklebung dient der Stabilisierung von Faltungen aus Faltkanten und Faltabschnitten im Inneren des Faltenpacks. Dabei ist die Verklebung in Ausführungsformen zum Stabilisieren des Faltenpacks von zumindest einer Seite des Faltenpacks oder einem seitlichen Abschluss des Filterelements beabstandet angeordnet. Der Abstand entlang der Faltkantenrichtung zwischen der Verklebung und der jeweiligen Seite des Faltenpacks oder einer weiteren Verklebung ist vorzugsweise so gewählt, dass bei bestimmungsgemäßem Betrieb die Faltkanten und/oder Faltabschnitte aufgrund der Durchströmung mit zu filterndem Fluid nicht beschädigt oder derart deformiert werden, dass eine Filtrationsgüte beeinträchtigt wird.

Die stabilisierenden Effekte äußern sich durch die Erhöhung von Flächenträgheitsmomenten. Je nach Ausführungsform wird einerseits das Flächenträgheitsmoment des Filterbalges erhöht und so dessen Widerstand gegenüber einer strömungskraftbedingten Durchbiegung erhöht. Innerhalb des Faltenbalges bewirkt eine Verklebung in den umgebenden Faltabschnitten zudem eine Flächenträgheitsmomenterhöhung der Faltabschnitte selbst, wodurch deren Widerstandsvermögen gegenüber einer strömungskraftinduzierten Durchbiegung der Falten verbessert wird. Beide Teilwirkungen der Verklebung verbessern gemeinsam den Versagensfall einer exzessiven Elementverformung, insbesondere im Betriebsfall bei feuchtem oder nassem Filterelement, bei dem die mechanischen Eigenschaften eines Filtermaterials deutlich reduziert sein können.

Die Verklebung liegt dabei im Inneren des Faltenpacks vor und ist insbesondere von den durch die Faltprofile bzw. Faltprofilkanten gebildeten Seiten des Filterelements, vorzugsweise gleich groß, beabstandet.

In Ausführungsformen mit mehreren innenliegenden Klebstoffspuren ist eine Aufteilung des Filterbalges in gleich breite Teilabschnitte zur mechanischen Versteifung vorteilhaft.

Die Verbindung zwischen benachbarten Faltabschnitten erfolgt vorzugsweise ausschließlich mit Hilfe des Klebstoffmaterials direkt zwischen den benachbarten Faltabschnitten. Insofern dient das Klebstoffmaterial nicht der Befestigung zusätzlicher Elemente an dem Filtermedium, sondern stellt im ausgehärteten Zustand eine materialeinstückige Verbindung dar.

In Ausführungsformen bildet die jeweilige Verklebung aus dem Klebstoffmaterial ohne weitere stabilisierende separate Teile oder Stücke im Inneren des Faltenpacks eine Stützung, Abdichtung und/oder mechanische Verstärkung des Filtermediums aus.

In Ausführungsformen ist die Verklebung beabstandet zwischen zwei fluiddicht verschlossenen Seiten des Filterelements angeordnet. Die Seiten können beispielsweise durch auf seitliche Faltprofile angebrachte Seitenbänder abgedichtet sein. Denkbar ist auch ein fluiddichter Verschluss durch ein Verschlussmaterial, wie PUR-Schaum, Klebstoff oder dergleichen. Die Verklebung ist zusätzlich zu den seitlichen Abdichtungen vorgesehen, um das Filterelement beabstandet von den Außenrändern zu stützen, es mechanisch zu Verstärken und/oder eine gezielte Strömungsführung innerhalb des Filterelementes auszubilden.

Die Faltungen aus Faltkanten und Faltabschnittsbereichen werden bei der Herstellung quer zu einer Maschinenlaufrichtung, entlang der das Filtermedium als flächiges Ausgangsmaterial transportiert wird, ausgebildet. Die Verklebung verläuft beispielsweise über mehrere Faltungen unterschiedlicher Orientierung hinweg abschnittsweise schräg zu der Maschinenlaufrichtung. In Ausführungsformen verläuft die Verklebung geschwungen zur Maschinenlaufrichtung und ist bezüglich der beiden Seiten des Filterelements bzw. Faltenpacks gleich beabstandet. Dadurch wird eine gleichmäßige Stützung des Faltenpacks bezogen auf die An- und Abströmfläche des Filterelements erzielt. Man kann aufgrund der schräg und/oder versetzt verlaufenden Klebelinie erreichen, dass die Verklebung bezogen auf die An- und Abströmfläche Segmente begrenzt, die gleich groß sind.

Unter einer Klebelinie kann eine Linie, oder ein Bereich an oder auf dem Filtermedium verstanden werden, auf welchem das Klebstoffmaterial aufgetragen ist und seine Klebewirkung gegenüber zwei Faltabschnitten entfaltet. Eine Klebelinie kann über mehrere Faltabschnitte und Faltkanten verlaufen. Benachbarte Faltabschnitte des Filterelementes werden dadurch miteinander verbunden. Der Klebstoffauftrag auf die Klebelinie erfolgt während der Herstellung vorzugsweise in einem ungefalteten Zustand des Filtermediums.

Durch einen abschnittsweise schrägen oder gekrümmten Verlauf der Klebelinie bezüglich der Faltkanten entsteht ein an die jeweilige äußere Geometrie des Filterelements angepasstes Stabilisierungselement, das flexibel an die Lastverteilung aufgrund des Druckabfalls beim Durchströmen angepasst sein kann. Auf zusätzliche Stabilisierungselemente im Inneren des Faltenpacks kann insofern verzichtet werden oder solche Stabilisierungsmittel sind hinsichtlich der Materialwahl, ihrer Festigkeit oder Geometrie einfacher realisierbar. Die Stabilisierung der Falten im Inneren des Faltenpack durch Verklebungen erlaubt eine einfache Herstellung, da der Klebstoffauftrag entlang der vorgegebenen Klebelinien noch vor dem Aufstellen der Falten erfolgen kann. In konventionellen Verfahren müssen nach der Herstellung des Faltenpacks noch weitere Schritte zum Ausbilden zusätzlicher Stabilisierungsmittel durchgeführt werden, die beispielsweise auf an- oder abströmseitige Faltkanten befestigt werden.

In Ausführungsformen ist das Klebstoffmaterial ausschließlich anströmseitig oder abströmseitig an den Faltabschnitten angeordnet. Durch einseitiges Aufbringen von Klebstoffmaterial wird Klebstoffmaterial gespart, die Gewichtszunahme des Filterelements durch Klebstoffmaterial ist reduziert. Eine einseitige Verklebung von Faltabschnitten miteinander schafft in Durchströmrichtung eine ausreichende Versteifung. Ferner kann das Faltenpack bei einseitigem Auftrag um Faltkanten gebogen werden und gegebenenfalls zu einem Endlosfaltenbalg weiterverarbeitet werden.

In anderen Ausführungsformen ist das Klebstoffmaterial beidseitig des Filtermediums angeordnet, wodurch eine besonders starke Stabilisierung der aneinander mit Hilfe des Klebstoffmaterials verbundenen Faltabschnitte erfolgt.

In Ausführungsformen ist das Klebstoffmaterial zwischen zwei Faltkanten, die wenigstens einen der direkt benachbarten Faltabschnitte begrenzen, zusammenhängend entlang der Klebelinie aufgetragen. Der zusammenhängende Auftrag des Klebstoffmaterials bewirkt ein besonders gleichmäßiges Ableiten einer von außen auf die Faltkanten einwirkenden Kraft. Die Kraft, beispielsweise in der Art von Schwer- oder Biegekräften, wird dadurch über die gesamte Verklebung entlang der Klebelinie verteilt.

Der zusammenhängende Auftrag des Klebstoffmaterials erlaubt eine fluiddichte Verklebung zwischen den Faltabschnitten und eine gewisse Strömungsführung des zu filternden Fluids im Inneren des Faltenbalgs aufgrund der bezüglich der Maschinenlaufrichtung und der Faltkantenrichtung schrägen Klebelinie.

In Ausführungsformen liegen sich die Klebelinien direkt benachbarter und sich gegenüberliegender Faltabschnitte deckungsgleich gegenüber. Indem sich die Klebelinien deckungsgleich gegenüberliegen, kann weniger Klebstoffmaterial zum Auftrag verwendet werden. Insbesondere bei einem vorherigen Auftrag des Klebstoffmaterials auf beide sich gegenüberliegende und zu verbindende Faltabschnitte wird ein präziser Verklebungsverlauf erzielt. Aufgrund des schrägen oder versetzten Verlaufs der Klebelinien bezüglich der Faltkanten oder der Maschinenlaufrichtung, sind die Klebelinien dann bezüglich jeder zweiten Faltung spiegelsymmetrisch vorgesehen.

In Ausführungsformen ist die Verklebung aus zwei zusammengefügten Klebstoffmaterialaufträgen gebildet. Die beiden Klebstoffmaterialaufträge haften dann an den sich direkt benachbarten und sich gegenüberliegenden Faltabschnitten und sind miteinander verbunden.

In Ausführungsformen liegen sich die Klebelinien direkt benachbarter und sich gegenüberliegender Faltabschnitte derart schräg zueinander gegenüber, dass die beiden zusammengefügten Klebstoffmaterialaufträge über den gesamten Verlauf an oder auf den beiden gegenüberliegender Faltabschnitten zusammengefügt sind. Bei dieser Variante wird ein kontinuierlicher Klebstoffauftrag über alle Faltkanten der verklebten Faltabschnitte hinweg ermöglicht, was die Herstellung vereinfacht. Ein noch erlaubter Versatz oder Winkel der gegenüberliegenden Klebelinien der direkt benachbarten und verklebten Faltabschnitte ergibt sich aus der Menge des Klebstoffauftrags. Im gefalteten Zustand sollten sich die beiden Klebstoffaufträge noch berühren, damit diese über den gesamten Verlauf eine zusammenhängende Verklebung bilden.

In Ausführungsformen ist das Klebstoffmaterial auf nach außen weisenden Faltkanten und zwischen den benachbarten Faltabschnitten angebracht.

Das Anbringen des Klebstoffmaterials auf den Faltkanten, die nach außen weisen, ermöglicht eine einfache Herstellung. Im flachen, ungefalteten Zustand des Filtermediums kann der Klebstoff, beispielsweise faden- oder raupenförmig über die gesamte Maschinenlaufrichtung aufgetragen werden und die Faltlinien schneiden. Es ist keine Unterbrechung des Klebstoffauftrags an den Faltkanten notwendig. Außerdem wird eine zuverlässige Verstärkung durch das ausgehärtete Klebstoffmaterial erzielt.

In Ausführungsformen umfasst das Filterelement mindestens zwei Verklebungen entlang einer jeweiligen Klebelinie. Die Klebelinien sind dabei voneinander beabstandet und verlaufen jeweils zumindest abschnittsweise schräg zu der zwischen den zwei direkt benachbarten Faltabschnitten liegenden Faltkante oder entlang der zwischen den zwei direkt benachbarten Faltabschnitten liegenden Faltkante versetzt.

Dadurch können zwei miteinander verklebte Faltabschnitte an mehreren Stellen durch eine unabhängige Verklebung in ihrer Form stabilisiert werden. Die Ausdehnung des Filterelements entlang der Faltkanten bzw. die Breite des Filterelements kann vergrößert werden, da die sich ergebenden voneinander beabstandeten Verklebungen jeweils im Inneren des Faltenbalgs Stabilisierungselemente ausbilden.

In Ausführungsformen ändert sich ein Abstand zwischen den zwei Verklebungen entlang der Faltkanten zwischen verschiedenen, insbesondere benachbarten, Faltkanten.

Durch die Änderung des Abstandes der zwei Verklebungen von einer zur nächsten Faltkante kann eine Anpassung der Formstabilität gemäß der lokalen Belastung einer jeweiligen Faltkante erreicht werden. Der Abstand ist beispielsweise so entlang der Maschinenlaufrichtung angepasst, dass jeweils gleich lange Abschnitte zwischen den beiden Verklebungen zur jeweiligen äußeren Seite des Faltenpacks und zwischen den Verklebungen vorliegen. Dadurch werden eine gleichmäßige Belastung des Faltenpacks und eine gleichmäßige Verstärkung durch die Verklebungen bezogen auf die Filterelementbreite erzielt.

In Ausführungsformen erstreckt sich die jeweilige Verklebung über mehrere, durch das Klebstoffmaterial miteinander verbundene Faltabschnitte und Faltkanten zur Ausbildung einer Klebstoffwand in dem Faltenpack.

Die bisher beschriebenen Ausführungsformen fallen nicht unter den Wortlaut der Ansprüche, werden aber als das Verständnis der Erfindung erleichternd angesehen.

Erfindungsgemäß wird ein Filterelement zum Filtern eines Fluids vorgeschlagen, insbesondere zum Filtern von Verbrennungsluft in einem Kraftfahrzeug und/oder zum Filtern von Betriebsmitteln eines Kraftfahrzeugs, wobei das Filterelement ein Faltenpack mit einer Anströmseite und einer Abströmseite umfasst, und das Faltenpack aus einem zick-zackförmig gefalteten Filtermedium gebildet ist. Das Faltenpack weist eine Höhe zwischen der Anströmseite und der Abströmseite auf, und innerhalb des Faltenpacks verläuft mindestens eine aus einem Klebstoffmaterial gebildete Klebstoffwand. Die Klebstoffwand ist durch Verklebungen direkt benachbarter Faltabschnitte gebildet.

Unter einer Klebstoffwand kann man die Gesamtheit von zusammenhängenden Bereichen aus Klebstoff und mit Klebstoff beschichteter Bereiche von Filtermedium (beispielsweise entlang der Klebelinien) einer Abfolge aufeinander folgender Faltabschnitte entlang der Maschinenlaufrichtung verstehen. Insofern wird innerhalb des Faltenpacks und des Filterelements, also nicht randseitig abschließend, sondern im Inneren eine wandartige feste stabilisierende Struktur geschaffen, die als "Klebstoffwand" bezeichnet werden kann. Eine Klebstoffwand bewirkt eine Formstabilität über einen durch den Verlauf der Klebstoffwand bestimmten Bereich des Filterelementes und ermöglicht eine gezielte Strömungsführung im Inneren des Faltenbalgs.

Eine Klebstoffwand ist dabei zu unterscheiden von einem bekannten, mit Klebstoff benetztem Faden, der auf den Faltenspitzen aufgelegt ist, insbesondere um Rundfilterelemente zu stabilisieren. Ein solcher Faden definiert einen Abstand der Faltenspitzen zueinander entlang des Verlaufs des Fadens. Der Faden dringt nicht zwischen die Falten ein und stabilisiert nicht die Falten. Die Fluidströmung wird durch einen Faden nicht beeinflusst.

Eine Klebstoffwand füllt zwischen 50 % und 100 %, insbesondere zumindest 90 %, der Fläche zwischen zwei Falten senkrecht zur Laufrichtung aus.

Aufgrund der Klebstoffwand kann insbesondere auf zusätzliche in oder an das Filterelement angebrachte Stabilisierungsgitter verzichtet werden oder solche zusätzlichen Stabilisierungselemente können einfacher gestaltet werden. Eine Klebstoffwand kann vorteilhafterweise vollständig zwischen der Anströmseite oder Anströmfläche und der Faltkante der Abströmseite oder Abströmfläche des Filterelements oder in einer alternativen Ausführung vollständig zwischen der Abströmseite oder Abströmfläche und der Faltenkante der Anströmseite oder Anströmfläche des Filterelements verlaufen.

Zusätzlich oder alternativ kann die Klebstoffwand als Strömungsleitelement im Inneren des Faltenpacks wirken. Durch eine freie Gestaltung der Klebstoffwand in Richtung der Längsseite des Faltenpacks und entlang der Durchströmungsrichtung quer zur Oberfläche des Filterelements kann das durch das Filterelement strömende Fluid gezielt in der Strömungsrichtung beeinflusst werden. Des weiteren sind Querschnittsverengungen in Durchströmrichtung möglich zur Beeinflussung der Durchströmgeschwindigkeit in Teilbereichen des Filterelementes. Durch die freie Gestaltung der Klebstoffwand kann die Durchströmung des Filterelements optimal an eine Gehäusegestaltung angepasst werden und/oder die Standzeit des Filterelements verbessert werden.

In einer besonderen Ausführung kreuzen sich die Klebstoffwände und bilden somit einzelne Durchströmungsbereiche innerhalb des Faltenpacks. Die aus den von den Klebstoffwänden umschlossenen Bereichen gebildeten Segmente können durch ein entsprechendes Gehäuse mit Ein- und Auslass gezielt angeströmt werden.

Die Klebstoffwände können dabei in Durchströmungsrichtung und/oder Maschinenlaufrichtung geneigt sein, um eine bestmögliche Strömungsverteilung und/oder Strömungsgeschwindigkeit sicherzustellen.

In einer besonderen Ausführung ändert sich die Neigung einer Klebstoffwand in Bezug zur Flächennormalen N der Abströmseite bzw. Anströmseite in Richtung der Länge des Faltenpacks, beispielsweise von 45° zu -45°.

Das Innere des Filterelements wird beispielsweise von der Anströmfläche und der Abströmfläche gebildet, die durch die Vielzahl von von außen sichtbaren Faltkanten gebildet sind, sowie von seitlichen fluiddichten oder aus Filtermedium gebildeten Begrenzungen des Faltenpacks. Unter im "Inneren" kann auch als der nicht von außen ohne weiteres handhabbare Bereich des Filterelements verstanden werden.

In Ausführungsformen hat das Filterelement eine Breite entlang der Faltkanten, eine quer zu der Breite verlaufende Länge und eine Höhe, welche einer Faltenhöhe entspricht. Das Filterelement kann dabei quaderförmig mit einem rechteckigen Grundriss ausgebildet sein, aber auch beispielsweise aufgrund von Bauraumanforderungen ein unregelmäßiges Volumen einschließen. Denkbar sind beispielsweise trapezförmige Grundrisse der An- und/oder Abströmseite oder auch eine sich über die Länge verändernde Faltenhöhe und damit Höhe des Filterelements.

Die Klebstoffwand erstreckt sich in Ausführungsformen zwischen der Anströmseite und der Abströmseite und kann die Anströmseite und die Abströmseite, insbesondere vollständig, zwischen der Anströmseite oder Anströmfläche und der Faltkante der Abströmseite oder Abströmfläche des Filterelements miteinander verbinden.

Alternativ erstreckt sich die Klebstoffwand zwischen der Abströmseite und der Anströmseite und kann die Abströmseite und die Anströmseite, insbesondere vollständig, zwischen der Faltkante der Anströmseite oder Anströmfläche und der Abströmseite oder Abströmfläche des Filterelements miteinander verbinden.

In Ausführungsformen umfasst die Klebstoffwand eine anströmseitige Kante und/oder eine abströmseitige Kante, wobei die anströmseitige Kante eine Anströmfläche des Filterelements begrenzt, und/oder die abströmseitige Kante eine Abströmfläche des Filterelements begrenzt. Die jeweilige Kante kann eine geschlossene Kontur bilden oder zusammen mit anderen seitlichen Begrenzungselementen, beispielsweise Seitenbändern oder Dichtungen die Querschnittsfläche entlang der Durchströmungsrichtung definieren.

Die Anströmfläche des Filterelements und die Abströmfläche des Filterelements können unterschiedliche Größen und/oder Geometrien haben. Durch Anpassung der Formen wird die Strömung vorteilhaft beeinflusst.

Die jeweilige Klebstoffwand ist insbesondere als Strömungsleitelement im Inneren des Faltenpacks ausgebildet. Die Klebstoffwand ist dabei beabstandet von den Rändern des Faltenpacks und zusätzlich zu der seitlichen Abdichtung an den Rändern des Faltenpacks ausgebildet. Ferner kann die Klebstoffwand weitere Eigenschaften, wie Stabilisierungs- oder zusätzliche Abdichtungsfunktionen haben.

In Ausführungsformen trennt die Klebstoffwand zumindest teilweise einen Reinfluidbereich von einem Rohfluidbereich ab. Eine solche Abtrennung ermöglicht die Realisierung von besonderen Bauformen, beispielsweise Filterelemente, die im Inneren Befestigungsmittel, wie Zuganker oder Ösen aufweisen.

In Ausführungsformen hat die Klebstoffwand wenigstens abschnittsweise entlang der Höhe einen Winkel zwischen 5° und nahe 90°, vorzugsweise zwischen 10° und 45°, besonders bevorzugt zwischen 10° und 30°, gegenüber einer Flächennormalen der Anström- oder Abströmseite. Solche Winkel ermöglichen entlang dem Strömungsweg im Inneren des Filterelements lokal Beschleunigungen oder Abbremsungen des Fluids. Im Fall gegenläufig orientierter Einlass- und Auslassstutzen des Filtergehäuses kann durch eine derartige Strömungsverlagerung eine Reduzierung des Druckverlusts des Filterelements und/oder eine Vergleichmäßigung des Strömungsbildes über der Anström- und/oder Abströmfläche bewirkt werden.

Die Klebstoffwand teilt das Faltenpack insbesondere in der Breite in Faltenpackabschnitte. Eine Unterteilung des Faltenpacks durch eine Klebstoffwand, erhöht die Formstabilität der jeweiligen Faltenpackabschnitte. Die Klebstoffwand ist aufgrund des bezüglich der Maschinenlaufrichtung bzw. der Faltenkantenrichtung schrägen oder versetzten Verlaufs an eine veränderliche Breite des Filterelements anpassbar. Man kann daher die Unterteilung der Faltenpackabschnitte in der Breite an einen durch eine Filteraufnahme und deren Ein- oder Ausströmeigenschaften vorgegebenen lokalen Druckabfall im Betrieb anpassen. Insgesamt wird die Filtrationsleistung dadurch verbessert.

Die Klebstoffwand verläuft in Richtung der Höhe schräg und/oder gekrümmt. Ein in Richtung der Höhe schräg und/oder gekrümmter Verlauf der Klebstoffwand ermöglicht eine flexible angepasste Formstabilität. Ferner kann eine Strömungsleitung des zu filternden Fluids im Inneren des Faltenpacks erreicht werden. Dadurch können die Filtrationseigenschaften verbessert werden und eine effiziente innere Strömungsführung erreicht werden.

In Ausführungsformen verläuft die Klebstoffwand in Richtung Länge schräg und/oder gekrümmt. Dies erlaubt eine verbesserte Formstabilität und eine anpassbare Strömungsführung.

In Ausführungsformen ist eine Höhe der Klebstoffwand zumindest abschnittsweise geringer als die Höhe des Filterelements.

In anderen Ausführungsformen ist die Klebstoffwand in Maschinenlaufrichtung zumindest in wenigstens einem Bereich unterbrochen.

Eine Höhe der Klebstoffwand kann insofern bereichsweise gegenüber der Höhe des Filterelements reduziert sein. An weniger beanspruchten Stellen des Filterelementes kann dadurch Klebstoffmaterial eingespart werden. Damit wird die zum Filtern des Fluids vorhandene Filterfläche vergrößert, da weniger Filtermaterial durch Klebstoff verschlossen wird.

Ferner kann durch eine, insbesondere periodische, Unterbrechung des Klebstoffauftrags im Bereich der anström- und/oder abströmseitigen Faltkanten eine Klebstoffwand mit verringerter Höhe ausgebildet werden.

In Ausführungsformen ist die Klebstoffwand entlang der Länge des Filterelements unterbrochen. In weiteren Ausführungsformen ist die Klebstoffwand von einer Stirnseite des Filterelements beabstandet.

Als Stirnseite kann beispielsweise der durch eine Endfalte oder einen Endfaltenabschnitt gebildete Abschluss des Faltenpacks verstanden werden. Es ist auch möglich, dass ein Kopfband die Stirnseite bildet. Ein unterbrochener Verlauf der Klebstoffwand ermöglicht es, das Faltenpack insbesondere dort in seiner Form zu stabilisieren, wo es aufgrund der äußeren Anforderung besonderes beansprucht ist.

In Ausführungsformen hat die Klebstoffwand in dem Faltenpack eine geschlossene Form. Die Klebstoffwand kann dabei entlang einer unregelmäßigen geschlossenen Kurve verlaufen. Sowohl die Durchströmungseigenschaften wie auch die Formstabilität des Filterelements kann dadurch verbessert werden. Eine geschlossene Klebstoffwandstruktur kann sich dabei gegen sich selbst abstützen und ist besonders stabil.

Die Formstabilität des Faltenpacks und eine besondere Strömungsführung kann durch eine Klebstoffwand erzielt werden. Es lassen sich so äußere, schräg geschnittene Geometrien des Filterelements effizient realisieren, ohne zusätzlich abdichtende Bauteile geometrisch anpassen zu müssen und in Zusatzschritten anbringen zu müssen.

In Ausführungsformen sind mehrere Klebstoffwände vorgesehen. Die mehreren Klebstoffwände können sich schneiden.

Ein Schneiden oder Berühren mehrerer Klebstoffwände erhöht die Formstabilität des Faltenpacks zusätzlich. Komplexe Belastungsverteilungen, die von außen auf das Filterelement einwirken, lassen sich damit durch die geometrischen Strukturen der Klebstoffwände abfangen. Die Klebstoffwände können insofern ein inneres komplexes Stützgitter im Faltenbalg ausbilden.

In Ausführungsformen ist die Breite des Filterelements entlang der Länge gleichmäßig durch Abstände zwischen den Klebstoffwänden und Abständen zwischen den Klebstoffwänden und Seiten des Filterelements aufgeteilt.

Durch das gleichmäßige Unterteilen der Breite des Filterelementes im Verlauf seiner Länge wird die Belastbarkeit und Stabilität besonders breiter Filterelemente erhöht, weil die maximal auftretende Hebellänge einer Biegekraft zur Ausbildung eines Biegemoments um durch Versteifungsmaßnahmen fixierte Faltenbereich bei gleichmäßiger Aufteilung minimal ist.

Durch die hinsichtlich ihrer Geometrie flexibel implementierbaren Klebstoffwände kann jeweils sowohl die Stabilität als auch die Filtrationseigenschaft des Filterelements verbessert werden. Ferner bilden die Klebstoffwände aufwandsgünstig herstellbare Stabilisierungselemente und Strömungsleitelemente aus.

In Ausführungsformen ist das Faltenpack zu einem zylinderförmigen Endlosfaltenbalg gebogen. Dabei sind insbesondere die Endfaltenabschnitte des Faltenpacks miteinander fluiddicht verbunden.

Mit Hilfe eines entsprechenden Endlosfaltenbalgs kann beispielsweise eine Rundfiltergeometrie realisiert werden. Optional können an die Faltprofile Endscheiben angebracht werden, welche die jeweiligen Deckflächen des zylindrischen Rundfilterelements bilden.

Aufgrund der Verklebungen können stabilisierende Klebstoffwände ausgebildet werden, die komplexen Formflächen innerhalb des Faltenbalgs entsprechen. Aufgrund der stützenden Klebstoffwände kann beispielsweise auf innere oder äußere Stützrohre, die an inneren oder äußeren Faltkanten anliegen, verzichtet werden, oder solche Stützelemente können zumindest schwächer oder kleiner dimensioniert werden.

In Ausführungsformen umfasst das Klebstoffmaterial lösemittelhaltige Nassklebstoffe, Kontaktklebstoffe, Dispersionsklebstoffe, Schmelzklebstoffe, Heißkleber, Plastisole, Polyadditionsklebstoffe, Polykondensationsklebstoffe, Polymerisationsklebstoffe, Haftklebstoffe.

Denkbar ist der Einsatz von Klebstoffmaterialien, die Polyamid aufweisen. In Ausführungsformen ist das Klebstoffmaterial ein Schmelzklebstoff aus einem Thermoplastmaterial, insbesondere Polyamid-Schmelzklebeharz.

Das Filtermedium kann gefaltet oder wellenförmig ausgebildet sein. Als Faltungen sind beispielsweise Zickzack- oder W-Faltungen bekannt. Das Filtermedium kann geprägt und anschließend an Prägekanten unter Ausbildung von Faltkanten gefaltet sein. Als Ausgangsmaterial kann ein flächiger Materialfilterbogen dienen, welcher entsprechend umgeformt wird. Das Filtermedium besteht vorzugsweise aus einem nassgelegten, imprägnierten Filterpapier mit hohem Celluloseanteil.

Das Filtermedium ist beispielsweise ein Filtergewebe, ein Filtergelege oder ein Filtervlies. Insbesondere kann das Filtermedium in einem Spinnvlies- oder Meltblownverfahren hergestellt sein. Das Filtermedium kann Cellulose, Naturfasern, wie Baumwolle, oder Kunstfasern, beispielsweise aus Polyester, Polyphenylsulfid oder Polytetrafluorethylen, aufweisen.

Das Filtermedium kann ein- oder mehrlagig sein. Es kann ferner ein Adsorptionsmittel, wie etwa Aktivkohle, aufweisen.

Ein entsprechendes Filterelement dient der Filterung von Fluiden, also gasförmigen und/oder flüssigen Medien, beispielsweise Luft. Ein gasförmiges Medium bzw. Luft umfasst hier auch Gas- bzw. Luft-Feststoffgemische und/oder Gas- bzw. Luft-Flüssigkeitsgemische. Ein Filtermedium kann dazu eingerichtet sein, Partikel aus einem Luftstrom zu entfernen.

In Ausführungsformen umfasst das Filterelement über die Verklebung oder die Klebstoffwand als Stabilisierungselement für das Innere des Filterelements hinaus ein oder mehrere zusätzliche Stabilisierungselemente. Diese können das Filtermedium zumindest abschnittsweise stabilisieren, um dessen Form, insbesondere im Filterbetrieb, aufrechtzuerhalten. Die zusätzlichen Stabilisierungselemente können insbesondere einen geschlossenen oder offenen Rahmen - auch materialeinstückig - ausbilden, welcher das Filtermedium umgibt.

Die zusätzlichen Stabilisierungselemente können mit dem Filtermedium randseitig stoffschlüssig verbunden, insbesondere verklebt sein. Dazu können die Stabilisierungselemente erhitzt und das Filtermedium in das erhitzte Material eingedrückt werden. Alternativ können die zusätzlichen Stabilisierungselemente an das Filtermedium angespritzt sein. Weiterhin kann ein Klebstoff als Zusatzwerkstoff zum Einsatz kommen. Die zusätzlichen Stabilisierungselemente können selbst aus demselben Material wie das Filtermedium hergestellt sein. Alternativ können die zusätzlichen Stabilisierungselemente als Kunststoffspritzgussbauteile ausgebildet sein. Die zusätzlichen Stabilisierungselemente können steif oder flexibel sein.

Das Filterelement kann ferner eine Dichtung aufweisen, welche eine dem Filterelement zugeordnete Rohseite gegenüber einer Reinseite desselben abdichtet. Die Dichtung kann bauteilidentisch mit einem oder mehreren zusätzlichen Stabilisierungselementen des Filterelements ausgeführt sein. Alternativ kann die Dichtung als Zusatzbauteil ausgebildet sein. So kann die Dichtung beispielsweise an dem Filtermedium, den ein oder mehreren zusätzlichen Stabilisierungselementen, dem Filterelement oder der Filteraufnahme angebracht sein.

Das Filterelement kann in der Filteraufnahme austauschbar fixiert sein.

Es wird ferner eine Filteranordnung mit einem wie zuvor oder im Folgenden beschriebenen Filterelement und einer Filteraufnahme, beispielsweise in der Art eines Gehäuses, vorgeschlagen.

Das Filterelement bzw. die Filteranordnung kann in Personenkraftwägen, Lastkraftwägen, Baumaschinen, Wasserfahrzeugen, Schienenfahrzeugen, Luftfahrzeugen sowie allgemein in der Klimatechnik, insbesondere in Heiz-Klimageräten, in Haushaltsgeräten, in Brennstoffzellen oder in der Gebäudetechnik Anwendung finden. Diese Kraftwägen oder Fahrzeuge können elektrisch und/oder mittels Kraftstoff (insbesondere Benzin oder Diesel) betrieben werden. Im Hinblick auf die Gebäudetechnik kommen insbesondere stationäre Anlagen zur Behandlung von Luft in Betracht.

Weiterhin wird ein Verfahren zum Herstellen eines Filterelements vorgeschlagen. Bei dem Herstellungsverfahren werden die Schritte durchgeführt: Bereitstellen eines flachen Filtermediums; Auftragen eines Klebstoffmaterials entlang einer vorgegebenen Klebelinie; Falten des Filtermediums entlang vorgegebener Faltlinien, durch welche benachbarte Faltabschnitte begrenzt werden. Dadurch werden insbesondere zwischen den Faltabschnitten vorliegende Faltkanten ausgebildet. In einem weiteren Schritt wird das Klebstoffmaterial zum Ausbilden einer Verklebung zwischen benachbarten Faltabschnitten ausgehärtet. Das Klebstoffmaterial wird bei dem Verfahren derart auf die jeweilige Klebelinie aufgetragen, dass die Klebelinie zumindest abschnittsweise schräg zu, oder entlang der zwischen den jeweils benachbarten Faltabschnitten liegenden Faltlinie versetzt verläuft, wobei ein Abstand zum Rand des Filtermediums eingehalten wird.

Das Herstellungsverfahren dient insbesondere der Herstellung eines wie zuvor oder im Folgenden beschriebenen Filterelements.

Vorzugsweise erfolgt das Auftragen des Klebstoffmaterials vor dem Schritt des Ausbildens der Faltkanten. Man kann sagen, dass das Falten bzw. die Faltung des flachen Filtermediums nach dem Auftragen des Klebstoffmaterials erfolgt.

Unter einer Faltlinie kann eine Linie verstanden werden, welche durch den Faltvorgang zu einer Faltkante ausgebildet wird. Man kann sagen, dass die Faltlinie und eine Faltkante im gefalteten Zustand des Filtermediums zusammenfallen. Eine Faltlinie legt insofern die Position und den Verlauf der Faltung in der Art der Faltkante fest.

Als Klebelinie gilt beispielsweise eine Linie oder Kurve auf dem Filtermedium entlang derer das Filtermedium von Klebstoffmaterial bedeckt ist. In Abhängigkeit von der Konsistenz des Klebstoffauftrags kann dieser als Klebstofffaden, Klebstoffraupe oder dergleichen bezeichnet werden.

Indem Klebstoffmaterial schräg zu einer Faltlinie oder abschnittsweise dazu versetzt aufgetragen wird, lassen sich durch das Herstellungsverfahren Verläufe von Klebstoffmaterial umsetzen, die eine Stützung des Filterelements unter Berücksichtigung der Form des Filterelementes bewirken. Auf in oder an das Filterelement zusätzlich ein- oder angebrachte Stützelemente kann vorzugsweise verzichtet werden. Jedenfalls führt die jeweilige Verklebung zu einer Stabilisierung der Falten.

Die Stärke der Verklebung oder die Geometrie der Klebelinie des Filterelements kann auf eine von außen auf das Filterelement einwirkende Last angepasst werden. Eine Last entsteht insbesondere durch einen Druckabfall zwischen der Rein- und Rohseite des Filterelements im Betrieb. Beispielsweise kann die Dicke des Klebstoffauftrags entlang des Verlaufs der Klebelinie variiert werden, um unterschiedlich stabile innere Stützgitterstrukturen zu erzeugen.

In Ausführungsformen des Verfahrens wird das Klebstoffmaterial in einem fließfähigen Zustand aufgetragen. Dabei kann die Viskosität, beispielsweise bei Heißklebemitteln durch die Temperatur und/oder Zusammensetzung, so eingestellt werden, dass der gewünschte Klebstoffauftrag realisiert wird.

In Ausführungsformen des Verfahrens wird das Klebstoffmaterial mithilfe einer entlang der Faltlinien verschiebbaren Auftragsdüse, insbesondere durch kontinuierliches Extrudieren, aufgetragen. Damit kann die Dicke des Klebstoffauftrags entlang der Klebelinie kontrolliert werden.

Die quer zur Maschinenlaufrichtung bewegliche Klebstoffauftragsdüse ermöglicht einen flexiblen Verlauf der Klebelinien relativ zu den Faltlinien, die ebenfalls quer zur Maschinenlaufrichtung verlaufen.

Alternativ können auch verkippbare oder anderweitig quer zur Maschinenlaufrichtung bewegliche Düsen eingesetzt werden, um einen flexiblen Verlauf zu realisieren.

In Ausführungsformen des Verfahrens wird das Auftragen des Klebstoffmaterials zumindest abschnittweise entlang der Klebelinien unterbrochen. Durch ein Unterbrechen der Klebelinie kann die Verklebung auf einen besonders beanspruchten Bereich des Filterelementes beschränkt werden.

In Ausführungsformen des Verfahrens wird das flache Filtermedium entlang einer Maschinenlaufrichtung, welche quer zu dem Faltlinien verläuft, gefördert. Damit reicht es aus, die Auftragsdüse zum Erzeugen komplexer Geometrien in einer Richtung quer zum Verlauf des Filtermediums hin und her zu bewegen und gegebenenfalls den Klebstoffaustritt zu unterbrechen. Dies vereinfacht den Aufbau der Fertigungslinie.

In Ausführungsformen des Verfahrens wird das Klebstoffmaterial gleichzeitig entlang unterschiedlicher Klebelinien aufgetragen. Es können beispielsweise mehrere Auftragsdüsen nebeneinander oder in der Maschinenlaufrichtung nacheinander eingesetzt werden. Dadurch können gleichzeitig mehrere Klebstoffwände nebeneinander erzeugt werden.

In Ausführungsformen des Verfahrens werden einer oder mehrere der folgenden Verfahrensschritte durchgeführt: Prägen des Filtermediums entlang der Faltlinien; Fixieren des gefalteten Filtermediums während des Aushärtens des Klebstoffmaterials; Anbringen eines Seitenbands auf seitliche Faltprofile; und/oder Schneiden des gefalteten und mit den Verklebungen versehenen Filtermediums zum Ausbilden eines Faltenpacks.

Die vorstehend genannten Verfahrensschritte können insbesondere in der angegebenen Reihenfolge durchgeführt werden. Es sind aber auch abweichende Abfolgen denkbar. Beispielsweise kann das Anbringen des Seitenbands auch nach dem Schneiden des Faltenpacks erfolgen.

Weiterhin wird eine Verwendung eines zuvor oder im Folgenden erläuterten Filterelements bei einem Verfahren zum Filtern von Fluid vorgeschlagen. Bei dem Filterverfahren wird ein zu filterndes Fluid im Inneren des Faltenpacks mit Hilfe von Strömungsleitelementen gelenkt, welche vorzugsweise aus Klebstoffwänden, wie zuvor beschrieben, gebildet sind.

Weitere mögliche Implementierungen der Erfindung umfassen auch nicht explizit genannte Kombinationen von zuvor oder im Folgenden bezüglich der Ausführungsbeispiele beschriebenen Merkmale oder Verfahrensschritte. Dabei wird der Fachmann auch Einzelaspekte als Verbesserungen oder Ergänzungen zu der jeweiligen Grundform der Erfindung hinzufügen. Die bezüglich dem Filterelement erläuterten Aspekte, Vorteile und Wirkungen gelten ebenso für entsprechende Aspekte des Herstellungsverfahrens und umgekehrt.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
Fig. 1: eine nicht unter den Schutzumfang des Anspruchs fallende perspektivische Darstellung einer ersten Ausführungsform eines Filterelements;
Fig. 2: eine nicht unter den Schutzumfang des Anspruchs fallende perspektivische Darstellung eines für das Filterelement nach Fig. 1 geeigneten Faltenpacks;
Fig. 3: eine nicht unter den Schutzumfang des Anspruchs fallende perspektivische Darstellung einer Filteranordnung mit einem Filtergehäuse und einer Ausführung eines Filterelements;
Fig. 4: eine nicht unter den Schutzumfang des Anspruchs fallende schematische Darstellung eines Kraftfahrzeugs mit einer Filteranordnung nach Fig. 3;
Fig. 5: einen nicht unter den Schutzumfang des Anspruchs fallenden Ausschnitt des im Filterelement nach Fig. 1 eingesetzten Faltenpacks in perspektivische Darstellung mit einer Klebstoffwand;
Fig. 6: einen nicht unter den Schutzumfang des Anspruchs fallenden Schnitt AA entlang der in Fig. 5 perspektivisch dargestellten Klebstoffwand;
Fig. 7: einen nicht unter den Schutzumfang des Anspruchs fallenden Ausschnitt eines ungefalteten Filtermediums mit unterschiedlichen Klebelinien;
Fig. 8: eine nicht unter den Schutzumfang des Anspruchs fallende Detailansicht des Filtermediums nach Fig. 7;
Fig. 9: Verfahrensschritte einer Ausführungsform eines Herstellungsverfahrens für ein Filterelement;
Fig. 10: eine schematische Darstellung einer Vorrichtung zur Durchführung des Herstellungsverfahrens nach Fig. 9;
Fig. 11A: eine nicht unter den Schutzumfang des Anspruchs fallende perspektivische Ansicht einer zweiten Ausführungsform eines Filterelements mit durch das Filterelement verlaufenden Klebstoffwänden und trapezförmigem Grundriss;
Fig. 11B: eine nicht unter den Schutzumfang des Anspruchs fallende Draufsicht auf das Filterelement nach Fig. 11A.
Fig. 11C eine nicht unter den Schutzumfang des Anspruchs fallende Draufsicht des ungefalteten Filtermediums für das Filterelement nach Fig. 11A;
Fig. 12A - 12C: eine nicht unter den Schutzumfang des Anspruchs fallende perspektivische Ansicht und eine Draufsicht einer dritten Ausführungsform eines Filterelements mit einem unregelmäßigen Grundriss und das zugehörige ungefaltete Filtermedium;
Fig. 13A - 13C: eine nicht unter den Schutzumfang des Anspruchs fallende perspektivische Ansicht und eine Draufsicht einer vierten Ausführungsform eines Filterelements mit sich kreuzenden oder sich berührenden Klebstoffwänden und das zugehörige ungefaltete Filtermedium;
Fig. 14A - 14C: eine nicht unter den Schutzumfang des Anspruchs fallende perspektivische Ansicht und eine Draufsicht einer fünften Ausführungsform eines Filterelements mit geschwungenen sich schneidenden Klebstoffwänden und das zugehörige ungefaltete Filtermedium;
Fig. 15A - 15C: eine perspektivische Ansicht und eine Draufsicht einer sechsten Ausführungsform eines Filterelements mit entlang der Höhe schrägen Klebstoffwänden und das zugehörige ungefaltete Filtermedium;
Fig. 16A - 16C: eine perspektivische Ansicht und eine Draufsicht einer siebten Ausführungsform eines Filterelements mit einer sich entlang der Länge des Filterelements windenden Klebstoffwand und das zugehörige ungefaltete Filtermedium;
Fig. 17A - 17C: eine nicht unter den Schutzumfang des Anspruchs fallende perspektivische Ansicht und eine Draufsicht einer achten Ausführungsform eines Filterelements mit seitlich abschließenden Klebstoffwänden entlang abgeschrägter Seiten des Filterelements und das zugehörige ungefaltete Filtermedium;
Fig. 18A - 18C: eine nicht unter den Schutzumfang des Anspruchs fallende perspektivische Ansicht und eine Draufsicht einer neunten Ausführungsform eines Filterelements mit seitlichen Klebstoffwänden entlang abgeschrägter Seiten des Filterelements mit einem sich verjüngenden Querschnitt entlang der Länge und das zugehörige ungefaltete Filtermedium;
Fig. 19A - 19C: eine perspektivische Ansicht und eine Draufsicht einer zehnten Ausführungsform eines Filterelements als Rundfilterelement mit einer spiralförmig verlaufenden Klebstoffwand und das zugehörige ungefaltete Filtermedium;
Fig. 20A - 20C: eine perspektivische Ansicht und eine Draufsicht einer elften Ausführungsform eines Filterelements als Rundfilterelement mit sich schneidenden spiralförmig verlaufenden Klebstoffwänden und das zugehörige ungefaltete Filtermedium;
Fig. 21A - 21C: eine perspektivische Ansicht und eine Draufsicht einer zwölften Ausführungsform eines Filterelements als Rundfilterelement mit sich schneidenden spiralförmig verlaufenden Klebstoffwänden und das zugehörige ungefaltete Filtermedium;
Die Ausführungsformen der Figuren 19 bis 21 fallen nicht unter die Ansprüche.

In den Figuren sind gleiche oder funktionsgleiche Elemente, sofern nichts anderes angegeben ist, mit denselben Bezugszeichen versehen worden.

### Ausführungsform(en) der Erfindung

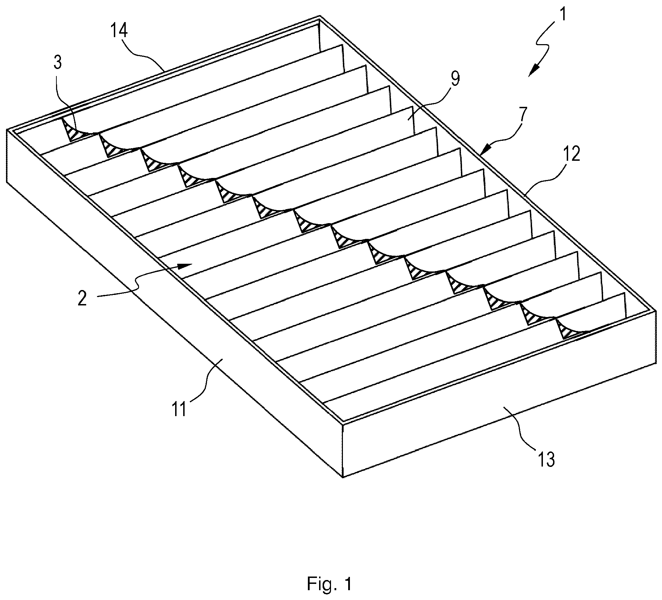

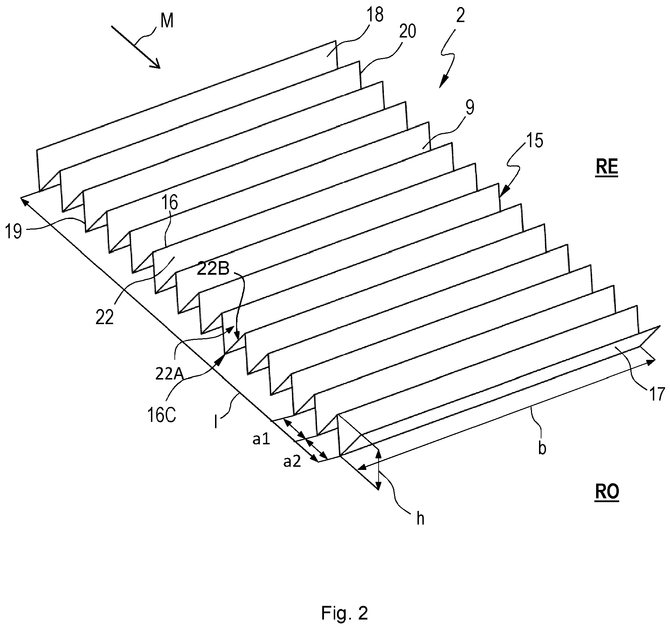

Fig. 1 zeigt eine erste Ausführungsform eines Filterelement 1. Das Filterelement 1 enthält ein zu einem Faltenpack 2 gefaltetes flaches Filtermedium 9, das von Seiten- und Kopfbändern 11, 12, 13, 14 umrahmt ist. Das Faltenpack 2 ist ohne Rahmen 7 in Fig. 2 dargestellt. Die in Fig. 1 gezeigten Seitenbänder 11, 12 sind mit den Faltenstirnkanten bzw. den äußeren Faltprofilen 19, 20, und die Kopfbänder 13, 14 sind mit den Endfalten 17, 18 verbunden, insbesondere durch Verschmelzen, Verscheißen oder Verkleben. Die Seitenbänder 11, 12 sowie die Kopfbänder 13, 14 können den Rahmen 7 einstückig oder mehrteilig ausbilden. Die Seitenbänder 11, 12 sowie die Kopfbänder 13, 14 können beispielsweise aus einem insbesondere flexiblen Fasermaterial oder als insbesondere steife Kunststoffspritzgussbauteile hergestellt sein und bilden einen umlaufenden Rahmen 7. Alternativ oder zusätzlich kann ein solcher Rahmen 7 auch durch Anspritzen an das Filtermedium 9 erzeugt sein.

Eine Klebstoffwand 3 verläuft beabstandet von den Seitenbändern zwischen den Kopfbändern 13, 14 schräg durch das Faltenpack 2. Die Klebstoffwand 3 unterteilt das Faltenpack 2 und verstärkt es in seiner gefalteten Form. Die Klebstoffwand 3 ist durch miteinander verbundene jeweils benachbarte Faltabschnitte gebildet und verläuft schräg zu einer Maschinenlaufrichtung M, die in Fig. 2 angedeutet ist. Die Verklebungen zwischen Faltabschnitten erfolgt auch schräg bezüglich der Faltkanten 16. Die sich mit Hilfe von Klebstoffmaterial ergebende Verklebung entlang einer Klebelinie auf der Oberfläche des Filtermediums 9 dient der Stabilisierung des Faltenpacks und kann als ein inneres Stützelement verstanden werden.

Die Fig. 2 zeigt ein als Faltenpack 2 gefaltetes Filtermedium 9, welches in dem Filterelement nach Fig. 1 einsetzbar ist. Die Verklebung von direkt benachbarten Faltabschnitten zum Ausbilden der stabilisierenden Klebstoffwand ist in Fig. 2 nicht dargestellt. Das Filtermedium 9 ist zickzackförmig zu dem Faltenpack 2 gefaltet und hat eine Vielzahl von parallelen Falten 15, welche sich quer zu einer Maschinenlaufrichtung M erstrecken. Bei der Erzeugung der Falten 15 wird das flache Filtermedium 9 in der Maschinenlaufrichtung M gestaucht, sodass die Falten 15 aufgestellt werden. Das gefaltete Filtermedium 9 wird auch als Plissee bezeichnet. Die Falten 15 können mittels Faltens entlang scharfer Faltkanten 16 (auch als Faltenspitzen bezeichnet) oder auch durch eine wellenförmige Ausführung des Filtermediums 9 erzeugt werden. Eine jeweilige Falte 15 ist durch zwei direkt benachbarte Faltabschnitte 22 definiert, welche über eine entsprechende Faltkante 16 miteinander verbunden sind. Die benachbarten Faltabschnitte 22A, 22B grenzen dabei durch eine gemeinsame Faltkante 16C aneinander. Entlang der Maschinenlaufrichtung M wechseln sich die Orientierungen der Faltungen 15 zum Ausbilden der zickzackförmigen Faltung ab. Der Faltenabstand zwischen benachbarten Faltkanten gleicher Orientierung ist mit a1, a2 angedeutet.

Seitlich erkennt man das zickzackförmige Faltprofil 19, 20, welches das Faltenpack 2 seitlich begrenzt. Die Stirnseiten sind durch die Endfaltenabschnitte 17, 18 gebildet. Das Faltenpack 2 umschließt dabei ein quaderförmiges Volumen mit einer rechteckigen Grundfläche der Länge l entlang der Maschinenlaufrichtung M bzw. quer zum Faltenverlauf und einer Breite b entlang der Faltkanten 16. Das Faltenpack 2 hat ferner eine Höhe h, die sich aus der Faltenhöhe und dem Winkel der Falten ergibt. In der Orientierung der Fig. 2 durchströmt das zu filternde Fluid, insbesondere Verbrennungsluft von unten nach oben das Faltenpack 2. Das gefaltete Filtermedium 9 trennt dabei den Rohfluidbereich RO von dem Reinfluidbereich RE.

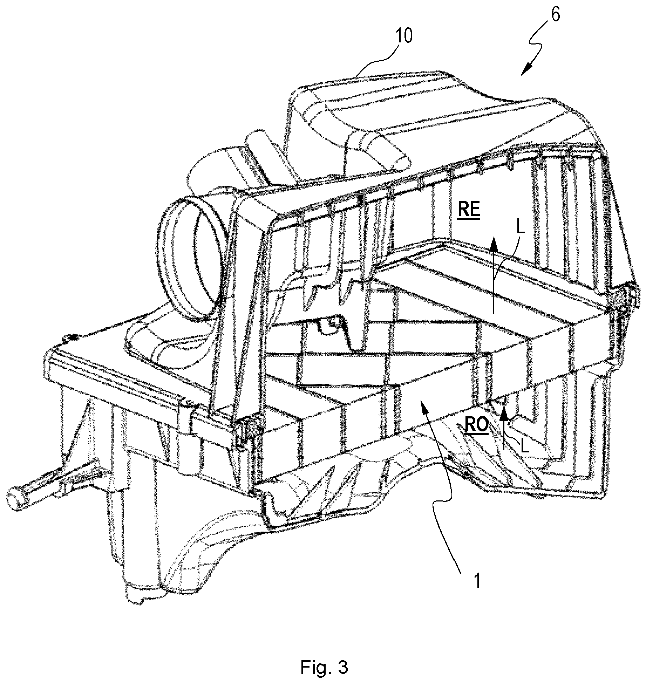

Die Fig. 3 zeigt schematisch eine Filteranordnung 6, bei der ein Filterelement nach Fig. 1 in ein Gehäuse 10 aufgenommen ist. Die zu filternde Luft L strömt dabei von der Rohseite RO des Filterelements 1 hin zu der Reinseite RE desselben. Um eine ausreichende seitliche Abdichtung zwischen der Roh- und Reinseite RO, RE zu gewährleisten, kann eine Dichtung 9A zwischen dem Filterelement 1 und dem Filtergehäuse 10 vorgesehen sein. Diese Dichtung 9A ist beispielsweise als eine angeschäumte PUR-Dichtung ausgebildet.

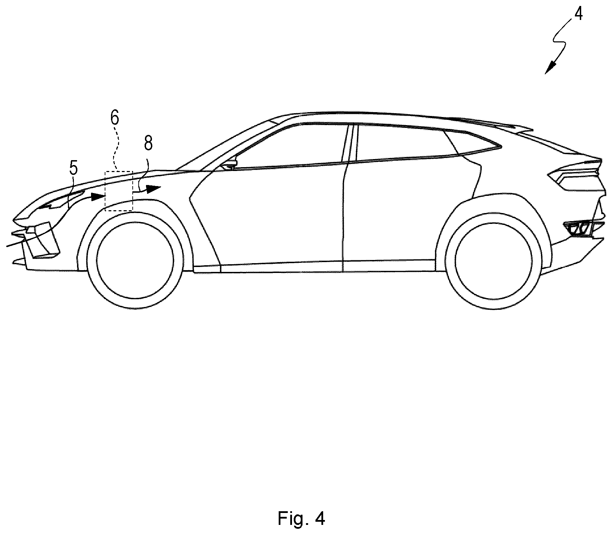

Die Fig. 4 zeigt ein Kraftfahrzeug 4 mit einer entsprechenden Filteranordnung 6 zum Filtern von Verbrennungsluft. Dabei nimmt eine Ansaugvorrichtung Außenluft 5 auf und führt diese der Filteranordnung 6 zu. Die gefilterte Reinluft 8 wird dann an den Verbrennungsmotor des Fahrzeugs weitergeleitet.

Insbesondere beim Einsatz des Filterelements 1 in einer Filteranordnung 6 zum Filtern von Verbrennungsluft in einem Kraftfahrzeug ist das Filterelement 1 einer hohen Druckdifferenz zwischen der Roh- und der Reinluftseite RO, RE ausgesetzt. Insbesondere in der Mitte der Anströmfläche wirken auf das Filterelement 1 aufgrund des Druckabfalls zwischen der Roh- und Reinseite RO, RE Kräfte, die die Faltungen verformen können und dadurch die Filtereigenschaften beeinträchtigen. Um das Faltenpack 1 im Inneren zu verstärken und die Faltungen bei Last im Betrieb zu stützen, sind Verklebungen zwischen benachbarten Faltabschnitten entlang der Maschinenlaufrichtung vorgesehen, wie es in Fig. 1 als Klebstoffwand 3 angedeutet ist. Die Klebstoffwand 3 wirkt ferner als Abstandshalter für gegenüberliegende Faltabschnitte. Darüber hinaus können weitere äußere Stützelemente, wie Stabilisierungsgitter oder in die Falten eingreifende starre Kammstrukturen an dem Filterelement 1 vorgesehen sein.

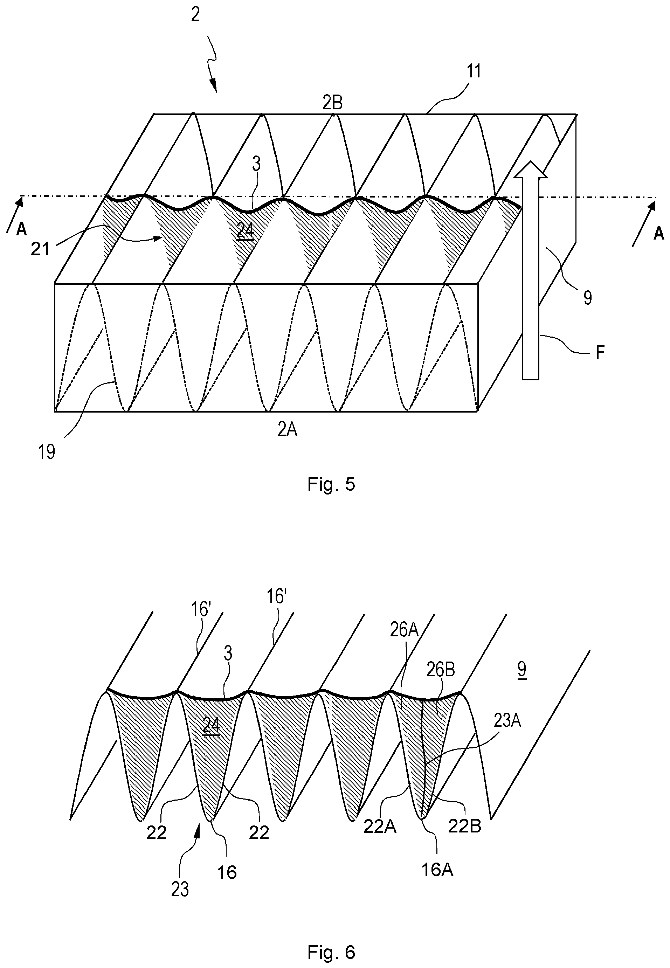

In dem Ausführungsbeispiel der Fig. 1 ist nun eine Verklebung von benachbarten Faltabschnitten und Faltkanten mit einem Klebstoffmaterial vorgesehen. Dies ist in den Fig. 5 - 8 näher erläutert. Das Klebstoffmaterial ist dabei ein Heißkleber, der entlang einer Klebelinie flüssig oder pastös vor dem Falten des Filtermediums 9 aufgetragen wird.

In der Fig. 5 ist ein Ausschnitt des Faltenpacks 2 der ersten Ausführungsform eines Filterelements nach Fig. 1 gezeigt. Durch das Innere des Faltenpacks 2 verläuft eine Klebstoffwand 3 aus ausgehärtetem Klebstoffmaterial 24 und mit dem Klebstoffmaterial 24 benetzten Bereichen des Filtermediums 9. Die benetzten Bereiche folgen einer Klebelinie 21 auf dem Filtermedium 9. Es ist eine bespielhafte Durchströmrichtung F angedeutet, sodass sich in der Orientierung der Fig. 5 eine untere Anströmseite 2A und eine obere Abströmseite 2B des Faltenpacks 2 ergibt.

Eine Schnittansicht AA des Faltenpacks 2 entlang der Klebstoffwand 3 zeigt die Fig. 6. Die Klebstoffwand 3 erstreckt sich jeweils vollständig zwischen benachbarten Faltabschnitten 22, die durch eine Faltkante 16 voneinander getrennt sind, und verbindet diese als Verklebung 23. Die Klebstoffwand 3 folgt der Faltenform und hält die Faltungen in ihrem Formquerschnitt. Die Höhe der in Fig. 6 dargestellten Klebstoffwand 3 entspricht der Faltenhöhe, wobei ein Teil der Klebstoffwand 3 zusätzlich die oberen Faltkanten 16' überdeckt. Die Klebstoffwand 3 erstreckt sich über mehrere benachbarte Falten aus jeweils zwei Faltabschnitten 22 und einer Faltkante 16.

Die Verklebung 23 wird durch ein Aneinanderbringen zumindest eines Klebstoffauftrags entlang einer Klebelinie auf die benachbarten Faltabschnitte erreicht. Durch einen Faltvorgang entlang der unteren Faltlinie zur Ausbildung der Faltkante 16A werden die gegenüberliegenden Seiten des zumindest einen Klebstoffauftrags zusammengefügt und es entsteht eine feste Verbindung entlang der Grenzfläche 23A, was in der Figur 6 rechts angedeutet ist.

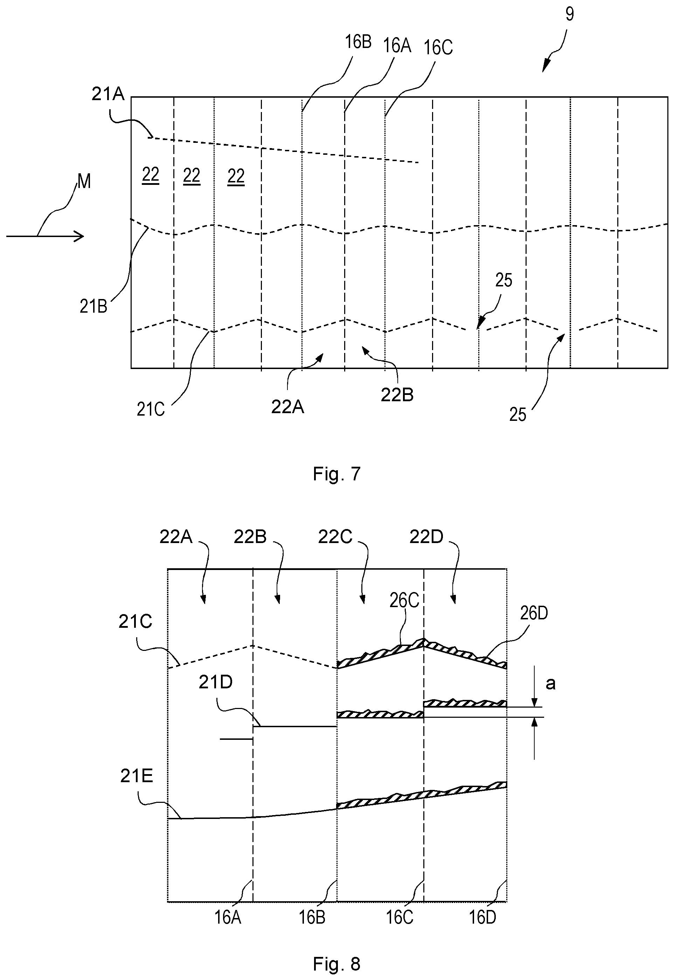

Zur Erläuterung des Verlaufs der Verklebungen 23 in dem Faltenpack zeigen die Fig. 7 und 8 Klebelinien, entlang derer der Klebstoffauftrag 26 und in der Folge die Verklebung 23 erfolgt, sowie Faltlinien, die in der Folge die Faltkanten 16 auf der Oberfläche des Filtermediums 9 definieren.

In Fig. 7 ist daher ein entfaltetes Filtermedium 9 gezeigt. Auf dem Filtermedium 9 verlaufen zwischen den Faltabschnitten, von denen nur eine Auswahl mit Bezugszeichen 22 versehen ist, Faltlinien, die als gestrichelte 16A und gepunktete Linien 16B, 16C dargestellt sind. Zwei benachbarte Faltabschnitte 22A, 22B sind durch eine Faltkante 16A voneinander getrennt. Zusätzlich sind die benachbarten Faltabschnitte 22A, 22B durch die beiden an die Faltabschnitte 22A, 22B angrenzenden Faltkanten 16B, 16C begrenzt.

Weiter zeigt die Fig. 7 drei beispielhafte Klebelinien 21A, 21B, 21C. Entlang der Klebelinie werden die jeweils benachbarten Faltabschnitte durch darauf aufgebrachtes Klebstoffmaterial miteinander verbunden, sodass eine Klebstoffwand ausgebildet wird.

Die Klebelinie 21A verläuft schräg zu den Faltkanten und schräg zu der Maschinenlaufrichtung M über eine begrenzte Anzahl von Faltabschnitten 22. Im gefalteten Zustand ergibt sich daraus eine Klebstoffwand, die schräg zur Maschinenlaufrichtung verläuft und sich über die gesamte Höhe, aber nicht über die gesamte Länge, des Faltenpacks erstreckt.

Die Klebelinie 21B verläuft wellenförmig über alle der in Fig. 7 gezeigten Faltabschnitte 22. Die Klebelinie 21B verläuft für jeweils benachbarte Faltabschnitte 22A, 22B spiegelsymmetrisch bezüglich der sie trennenden Faltlinie 16A. Dadurch kommen die auf die Klebelinie 21B aufgetragenen Klebstoffspuren zur Deckung und bilden eine Klebstoffwand, die sich über die Länge mehrerer benachbarter Faltenabschnitte hinweg erstreckt.

Die Klebelinie 21C verläuft zickzackförmig und ist in jeweils benachbarten Faltabschnitten 22A, 22B spiegelsymmetrisch bezüglich der sie trennenden Faltlinie 16A ausgeführt. Es wird dadurch eine präzise zuverlässige Verklebung erzielt. Die Klebelinie 21C ist ferner an zwei Stellen 25 im Bereich von Faltlinien unterbrochen.

Die Klebelinien 21A, 21B, 21C verlaufen abschnittsweise schräg zu einer jeweiligen Faltkante 16A, wobei die Faltkante 16A zwischen den jeweils benachbarten Faltabschnitten 22A, 22B liegt. Die Fig. 8 illustriert den entsprechenden Klebstoffauftrag auf die jeweilige Klebelinie. Es sind Faltabschnitte 22A - 22D, die von Faltlinien 16A - 16D begrenzt sind, vergrößert dargestellt. Der Auftrag des Klebstoffmaterials ist dabei rechts der Faltlinie 16B schraffiert entlang der jeweiligen Klebelinie angedeutet. Links der Faltlinie 16B ist die jeweilige Klebelinie ohne Klebstoffauftrag gezeigt. Die Klebelinie 21C entspricht der in Fig. 7 gezeigten und verläuft zickzackförmig entlang der Maschinenlaufrichtung. Auf die Faltabschnitte 22C und 22D ist Klebstoffmaterial 26C, 26D aufgetragen, das deckungsgleich zur Verklebung zusammengefügt wird.

Alternativ oder zusätzlich verläuft eine Klebelinie abschnittsweise versetzt, entlang der zwischen den benachbarten Faltabschnitten 22A, 22B liegenden Faltkante 16A. Die Abschnitte der Klebelinie 21D, die auf unterschiedlichen Faltabschnitten aufgebracht sind, haben einen Versatz in Richtung der Faltlinien zueinander, der mit a bezeichnet ist. Die entstehende Verklebung verschiebt sich dann von Faltkante 16B zu Faltkante 16D um den Versatz a. Es ergibt sich daraus eine resultierende schräg zur Längsrichtung des Faltenpacks verlaufende Klebstoffwand.

Eine weitere Ausführung zeigt die Klebelinie 21E, deren Verlauf über mehrere Faltlinien hinweg schräg zur Maschinenlaufrichtung verläuft, sodass sich im gefalteten Filterpack längs der Länge l eine gekrümmte Klebstoffwand ausbildet, deren an benachbarten Faltabschnitten befindliche Klebstoffraupen nicht oder nur partiell in Deckung sind.

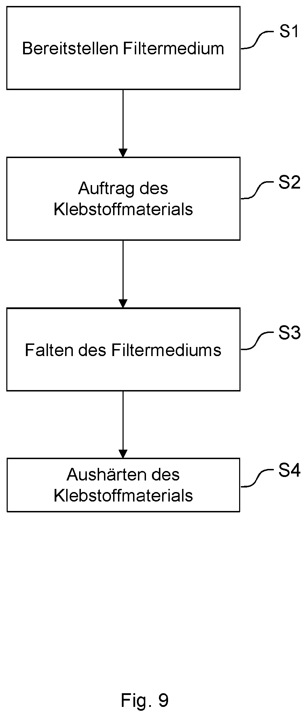

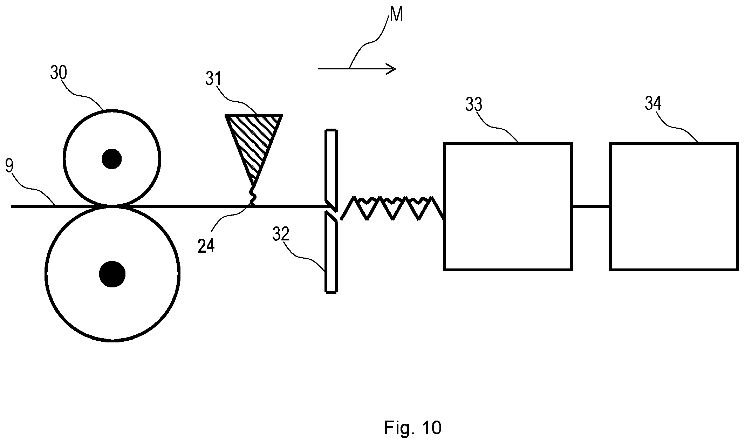

Im Folgenden wird ein Verfahren zur Herstellung eines Filterelements, wie es beispielsweise in Fig. 1 gezeigt ist anhand der Fig. 9 und Fig 10 beschrieben. Die Fig. 9 zeigt eine Abfolge von möglichen Verfahrensschritten und die Fig. 10 illustriert schematisch eine Vorrichtung zur Durchführung des Herstellungsverfahrens.

In einem ersten Schritt S1 wird das flache Filtermedium 9 bereitgestellt. Das Filtermedium wird dazu beispielsweise als Rollenmaterial einer Fördereinrichtung zugeführt. Dazu kann ein Endlosfiltermedium wie es in der Fig. 10 dargestellt ist, zunächst durch Walzen 30 flachgedrückt und/oder vorgeprägt und entlang der Maschinenlaufrichtung M, gefördert werden.

In einem Schritt S2 wird das Klebstoffmaterial 24 entlang vorgegebener Klebelinien auf das Filtermedium 9 aufgetragen. Die Klebelinien verlaufen hinsichtlich der Maschinenlaufrichtung M und bezüglich der zu erstellenden Faltungen schrägt, beispielsweise wie in den Fig. 7 und 8 angedeutet ist. Der Klebstoff ist in der beschriebenen Ausführungsform als Heißkleber ausgeführt und wird über einen Dispenser 31 mit einer quer zur Maschinenlaufrichtung M beweglichen Auftragsdüse als Klebstofffaden auf das geförderte Filtermedium aufgetragen. Die Auftragsdüsen erlauben beispielsweise ein schnelles Ein/Ausschalten des Klebstoffauftrags. Es ist der Einsatz mehrerer Klebstoffdüsen parallel denkbar, wobei der geschmolzene Heißkleber gleichzeitig entlang unterschiedlicher Klebelinien aufgetragen wird. Der Auftrag kann automatisiert über eine Programmsteuerung erfolgen. Die jeweilige Auftragsmenge wird so dosiert, dass aus der Auftragsdüse austretende Klebstofffäden eine jeweilige gewünschte Dicke haben. Bei der Verwendung mehrerer Düsen können diese sich hinterschneiden, so dass sich überschneidende Klebespuren möglich sind.

In einem weiteren Schritt S3 wird das mit Klebstoffmaterialspuren beaufschlagte Filtermedium 9 durch eine Faltvorrichtung 32 gefaltet. Die Faltlinien 16 können dabei vorgeprägt sein. Durch das Falten werden die aufgetragenen und noch nicht ausgehärteten Klebstoffspuren an gegenüberliegenden Faltabschnitte zusammengeführt, um eine Verklebung auszubilden. Die Form und Struktur eines Faltenpacks entsteht dabei.

Anschließend wird das in dem gefalteten Filtermedium 9 vorhandene Klebstoffmaterial im Schritt S4 ausgehärtet. Dies kann durch Abkühlen des Heißklebers beispielsweise mit einem Gebläse 33 erfolgen.

Mit Hilfe einer Schneidevorrichtung 34 werden die mit Klebstoffwänden stabilisierten Faltenpacks auf ihre für die jeweilige Anwendung notwendige Form zugeschnitten. Zusätzlich können zur weiteren Stabilisierung Seitenbänder, Kopfbänder und/oder Dichtungsrahmen an das Faltenpack angebracht werden.

Im Folgenden werden weitere Ausführungsformen von Filterelementen für Luftfilter mit verschiedenen Geometrien und Verläufen von Klebstoffwänden als innere Stützelemente erläutert. Dabei werden wiederkehrende Elemente nur bei der ersten Nennung erläutert und in der Folge das jeweilige Bezugszeichen verwendet.

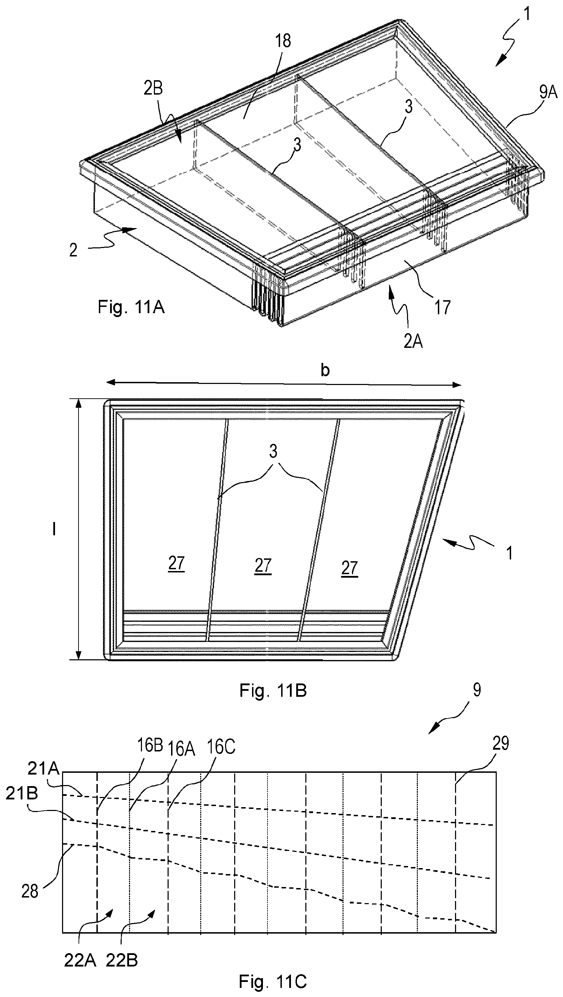

Die Fig. 11A zeigt eine perspektivische Ansicht einer zweiten Ausführungsform eines Filterelements 1. In Fig. 11B ist eine Draufsicht auf das in Fig. 11A dargestellte Filterelement 1 gezeigt. Das Filterelement 1 weist eine umlaufende Polyurethanschaum-Dichtung auf zur Befestigung und zur Abdichtung zwischen Roh- und Reinstoffseite. Im Bereich der äußeren Faltprofile (19,20) der Falten erfolgt die Abdichtung zwischen Roh- und Reinluftbereich durch eine fluiddichte, nicht eingezeichnete Klebstoffwand. Durch das in Fig. 11A und Fig. 11B gezeigte Filterelement 1 verlaufen zwei Klebstoffwände 3 in Richtung der Länge l des Filterelements 1. Die Klebstoffwände 3 teilen das Faltenpack 2 über den Verlauf der Länge l gleichmäßig in der Breite b in drei Faltenpackabschnitte 27. Die Klebstoffwand 3 erstreckt sich dabei ausgehend von einer vorderen Endfalte 17 zu einer dazu gegenüberliegende hinteren Endfalte 18 des Faltenpacks 2. Die zwei Klebstoffwände 3 verlaufen schräg zu den aufeinanderfolgenden Faltkanten 16. Dies ist in Fig. 11C illustriert. Fig. 11C zeigt das ungefaltete Filtermedium 9. Die Faltlinien 29 geben den Verlauf der Faltkanten 16 vor, von denen in der Fig. 11A nur eine Auswahl explizit gezeigt ist. Der Verlauf der beiden Klebelinien 21A, 21B ist schräg zu den Faltlinien 29. Zusätzlich ist in Fig. 11C eine Schneidelinie 28 eingezeichnet. Entlang dieser Linie wird das verklebte Faltenpack 2 getrennt, um den trapezförmigen Grundriss zu erzielen.

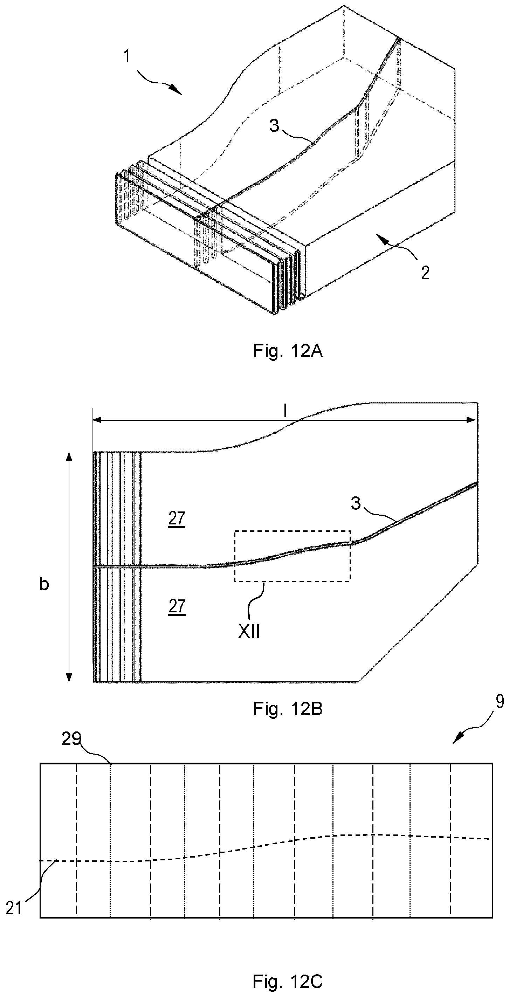

In Fig. 12A ist eine perspektivische Ansicht einer dritten Ausführungsform eines Filterelements 1 gezeigt. Der in der Draufsicht der Fig. 12B gestrichelt markierte Bereich XII ist in Fig. 12C als Detailansicht als ein Ausschnitt des entfalteten Filtermedium vergrößert dargestellt. In dieser Ausführungsform des Filterelements 1 verläuft die Klebstoffwand 3 in Richtung der Länge l des Filterelements 1 gekrümmt und/oder schräg. Damit kann sich die Klebstoffwand 3 der vorgegebenen gekrümmten, äußeren Kontur des Faltenpacks 2 anpassen. Das Faltenpack 2 wird in zur Stabilisierung des Faltenpacks 2 in geeignete, gleich breite Faltenpackabschnitte 27 unterteilt. Vorzugsweise verläuft die Klebstoffwand genau in der Mitte zwischen den Seiten des Faltenpacks 2.

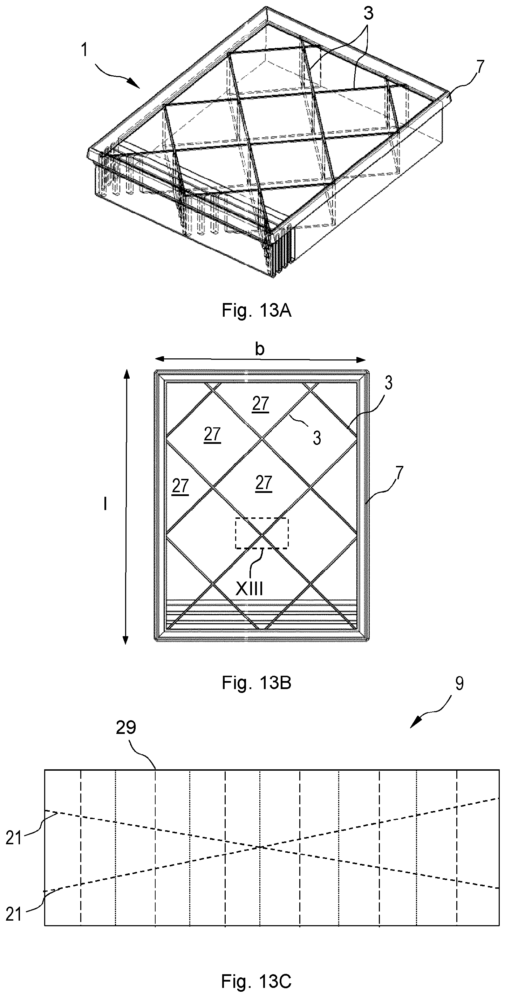

In Fig. 13 ist eine vierte Ausführungsform eines Filterelements 1 dargestellt. Man erkennt in der Draufsicht der Fig. 13B, dass sich die Klebstoffwände 3 kreuzen und ein Gitter innerhalb des Faltenpacks über seine gesamte Höhe ausbilden und fluiddicht ausgestaltet sind. Die Fig. 13C zeigt eine Detailansicht des in Fig. 13B markierten Ausschnitts XIII. Die aus den von den Klebstoffwänden 3 umschlossenen Bereichen 27 gebildeten Segmente können durch ein entsprechendes Gehäuse mit Ein- und Auslass gezielt angeströmt werden.

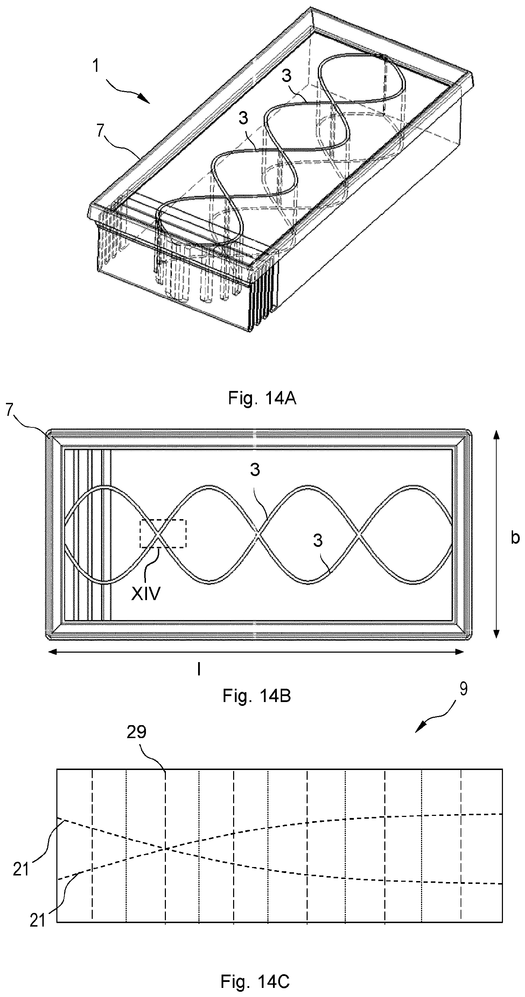

In Fig. 14 ist eine fünfte Ausführungsform eines Filterelements 1 dargestellt, bei der sich zwei Klebstoffwände sinusförmig entlang der Länge des Filterelements 1 erstrecken. Fig. 14C zeigt eine Detailansicht des in Fig. 14B markierten Ausschnitts XIV. Beide Klebstoffwände 3 sind von den seitlichen Rändern des Filterelements 1 beabstandet und stabilisieren das Faltenpack besonders in der Mitte entlang der Längsachse.

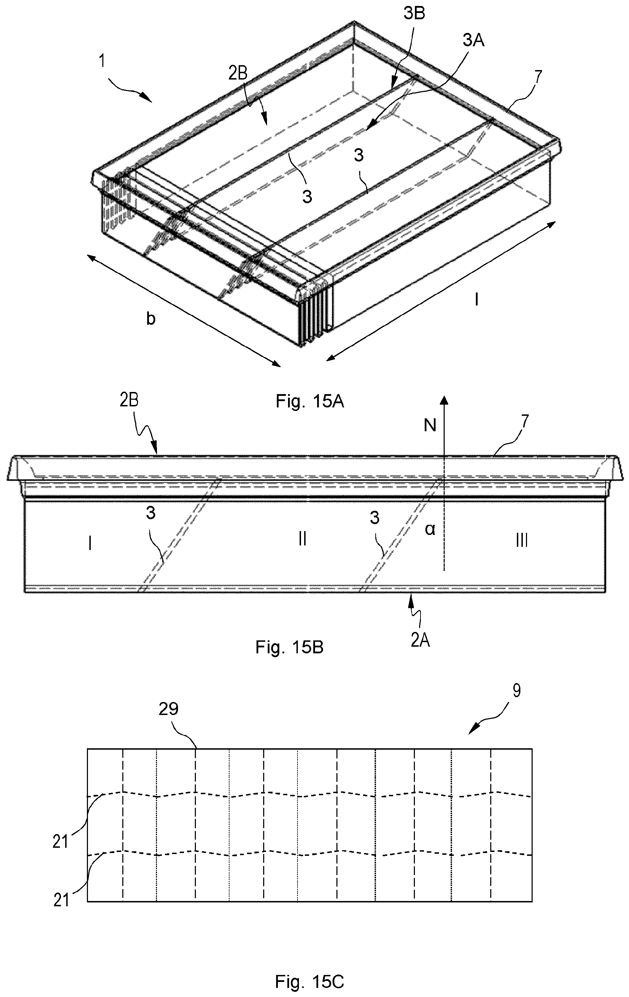

In Fig. 15 ist eine sechste Ausführungsform eines Filterelements 1 dargestellt. In dieser Ausführungsform sind zwei zueinander parallel verlaufende Klebstoffwände 3 dargestellt. Die Klebstoffwände 3 verlaufen nebeneinander in Richtung der Länge l des Faltenpacks 2. Dabei sind die Klebstoffwände 3 schräg zu der Richtung der Höhe h des Faltenpacks 2 geneigt. Die Klebstoffwände 3 verbinden dabei die Anströmseite 2A mit der Abströmseite 2B des Filterelements 1. Durch die Neigung kann eine Strömungs(um)leitung beim Durchströmen der Luft zwischen Anström- zur Abströmseite geschaffen werden. Dadurch können bestimmte Durchströmungsprofile in der An- bzw. Abströmfläche erzielt werden. Die beiden Klebstoffwände 3 schließen mit einer Flächennormalen N der Abströmseite 2B (und der Anströmseite 2A) einen Winkel α von etwa 45° ein. Die von den Klebstoffwänden 3 abgegrenzten inneren Bereiche I, II und III haben verschiedene Durchströmungseigenschaften. Die Querschnittsfläche beim Durchströmen ist für den Bereich II konstant, während sich der Durchströmungsquerschnitt des Bereichs I vergrößert. Der Durchströmungsquerschnitt des Bereichs III wird beim Durchströmen verringert. Dies führt dazu, dass im Bereich I die Strömungsgeschwindigkeit entlang der Höhe von der Anströmseite 2A zur Abströmseite 2B abnimmt und im Bereich III zu. Aufgrund der als innere Strömungsleitelemente wirkenden Klebstoffwände 3 kann eine an die jeweilige Einbausituation angepasste Strömungsverteilung innerhalb des Filterelements 1 eingestellt werden.

In einer alternativen, nicht gezeigten Ausführung können die Klebstoffwände 3 mit einer Flächennormalen N der Abströmseite 2B (und der Anströmseite 2A) Winkel α mit entgegengesetzter Neigung aufweisen, beispielsweise 45° und 315° ("-45°").

Der Winkel α der Klebstoffwände 3 kann in Richtung der Länge l des Faltenpacks 2 verändert ausgebildet sein. Die Klebstoffwände 3 können schräg, d. h. nicht parallel zueinander und schräg zum Außenrand des Faltenpacks 2 ausgestaltet sein.

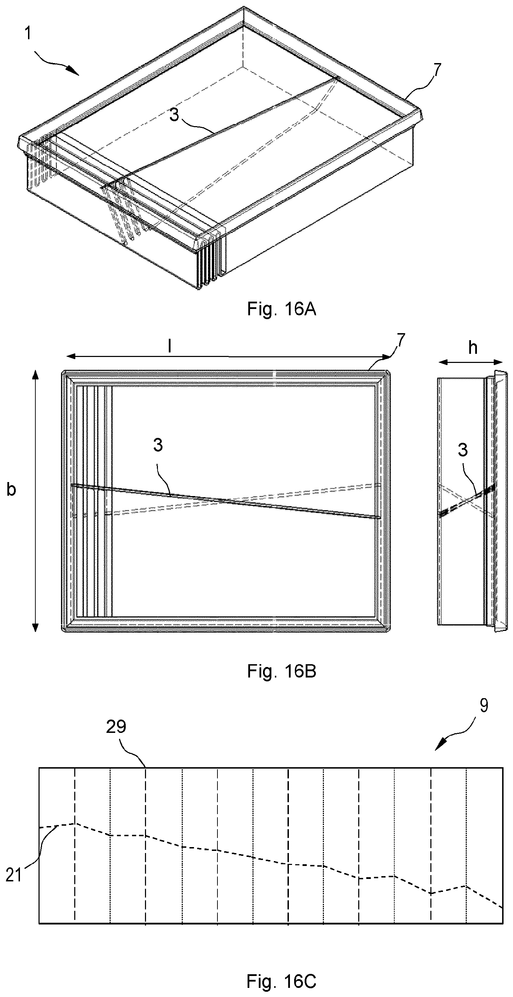

In Fig. 16 ist eine siebte Ausführungsform eines Filterelements 1 gezeigt. Eine entlang der Längsrichtung verlaufende Klebstoffwand 3 verwindet sich und ändert dabei die Neigung gegenüber der Höhenrichtung. Die Klebstoffwand 3 schafft damit eine innere Verstärkung des Faltenpacks und ermöglicht gleichzeitig eine Strömungsleitung.

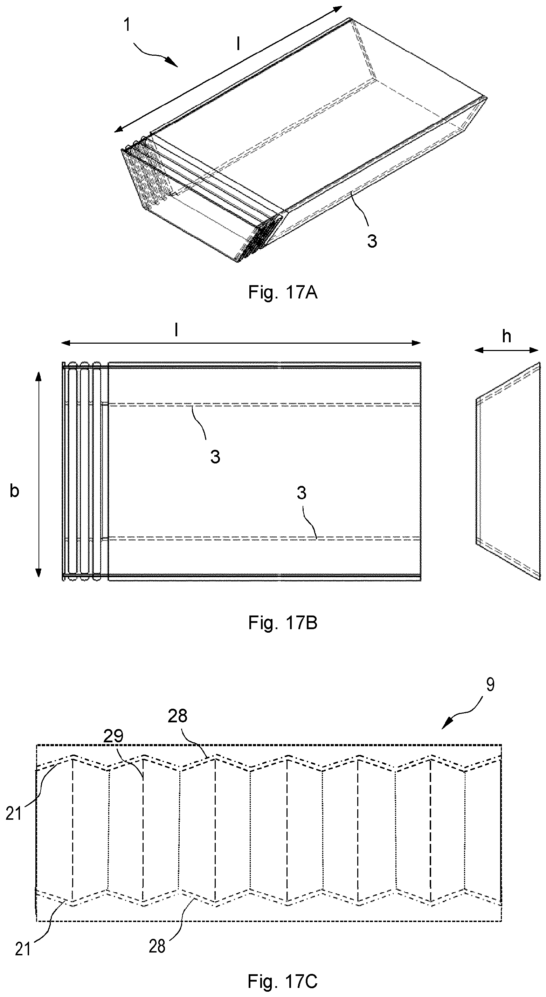

Die in der in Fig. 17 dargestellte achte Ausführungsform eines Filterelements 1 umfasst zwei schräg verlaufende Klebstoffwände 3. Die Klebstoffwände 3 sind zu der Höhe h des Faltenpacks schräg angeordnet und entgegengesetzt geneigt. Die Klebstoffwände 3 bilden die fluiddichten Seitenwände des Filterelements 1. Die Klebstoffwände dichten das Filterelement 1 seitlich fluiddicht ab. Es sind ferner Schneidelinien 28 angegeben, die parallel zu den Klebelinien 21 verlaufen und leicht nach seitlich außen versetzt sind.

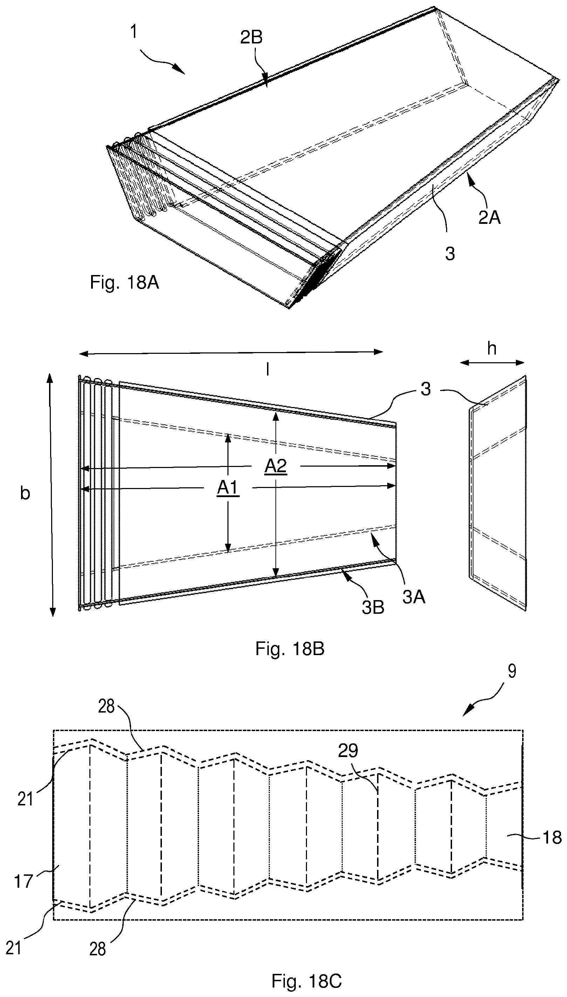

Die in Fig. 18 illustrierte neunte Ausführungsform des Filterelements 1 entspricht der siebten Ausführungsform weitestgehend. Außerdem verändert sich die Breite des Filterelements 1 entlang der Längenrichtung. In der Orientierung der Fig. 18 verläuft die Durchströmung mit Fluid von unten nach oben, sodass die Anströmseite 2A unten und die Abströmseite 2B oben liegt. Mit Hilfe der Klebstoffwände 3 bzw. deren Kanten 3A, 3B wird die Anströmfläche A1 und die Abströmfläche A2 begrenzt. Man erkennt, dass die Anströmfläche A1 kleiner ist als die Abströmfläche A2. Aufgrund der sich beim Durchströmen vergrößernden Querschnittsfläche wird die Strömungsgeschwindigkeit des zu filternden Fluids reduziert.

Diese Ausführung ermöglicht eine verbesserte Nutzung des Bauraums in der Art, dass eine größtmögliche Filterfläche in einem gegebenen Bauraum erzielt werden kann.

In den weiteren Ausführungsformen sind zylinderförmige Filterelemente 1 implementiert. Dabei ist das Faltenpack 2 zu einem zylinderförmigen Endlosfaltenbalg gebogen. Dazu sind die Endfaltenabschnitte 17, 18 zum Ausbilden eines Rundfilterelementes miteinander luftdicht verbunden. Die jeweiligen Klebstoffwände 3 verlaufen dann radial zwischen inneren Faltkanten und äußeren Faltkanten.

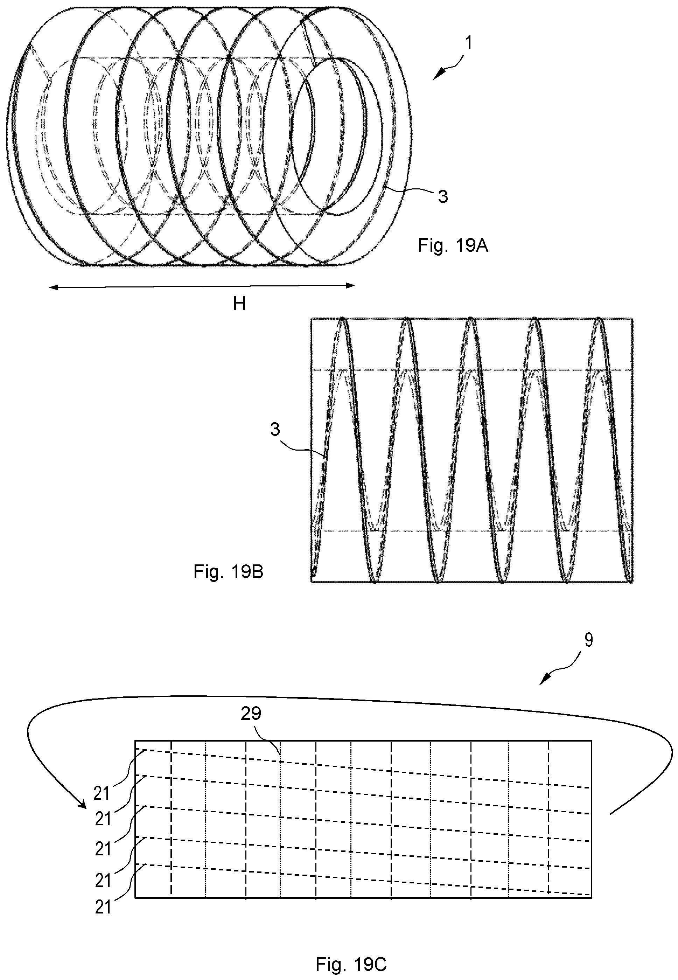

In den Fig. 19A - Fig. 19C ist eine zehnte Ausführungsform gezeigt, bei der sich eine Klebstoffwand 3 spiralförmig entlang der Höhe H des zylinderförmigen Filterelements 1 erstreckt. Durch die zusammenhängende Klebstoffwand 3 wird eine Stabilisierung gegenüber radial und axial wirkenden Kräften auf das Filterelement 1 geschaffen.

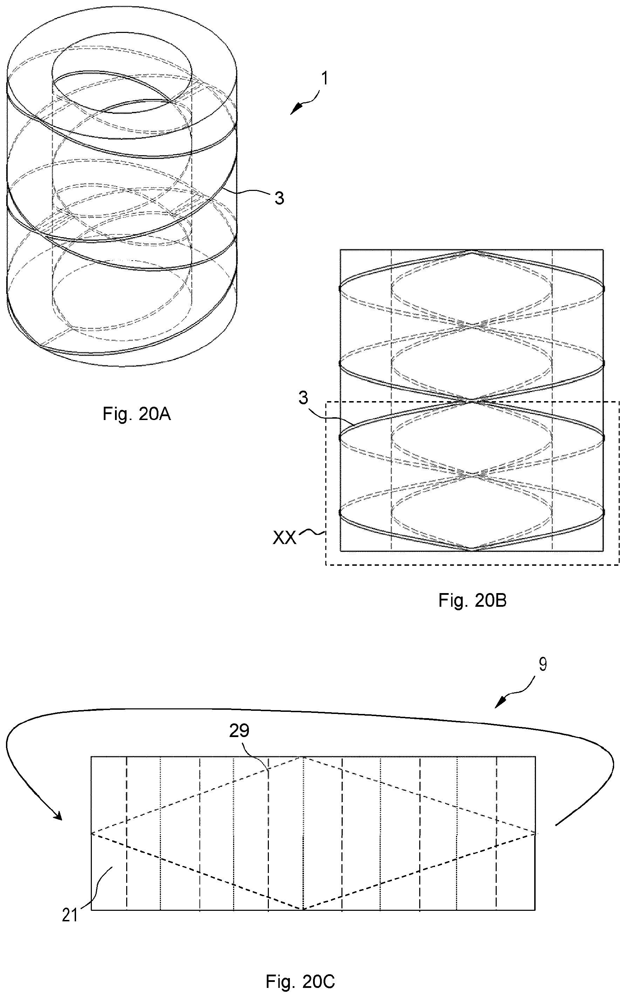

In den Fig. 20A - Fig. 20C ist eine elfte Ausführungsform gezeigt, bei der sich zwei Klebstoffwände 3 spiralförmig entlang der Höhe des zylinderförmigen Filterelements 1 erstrecken. Die Klebstoffwände 3 verlaufen dabei in entgegengesetztem Umlaufsinn zueinander und schneiden sich. Dies ist mit den in Fig. 20C dargestellten Klebelinien 21 dargestellt, die den Verlauf der Klebstoffwände in dem in Fig. 20B markierten Ausschnitt XX zeigen.

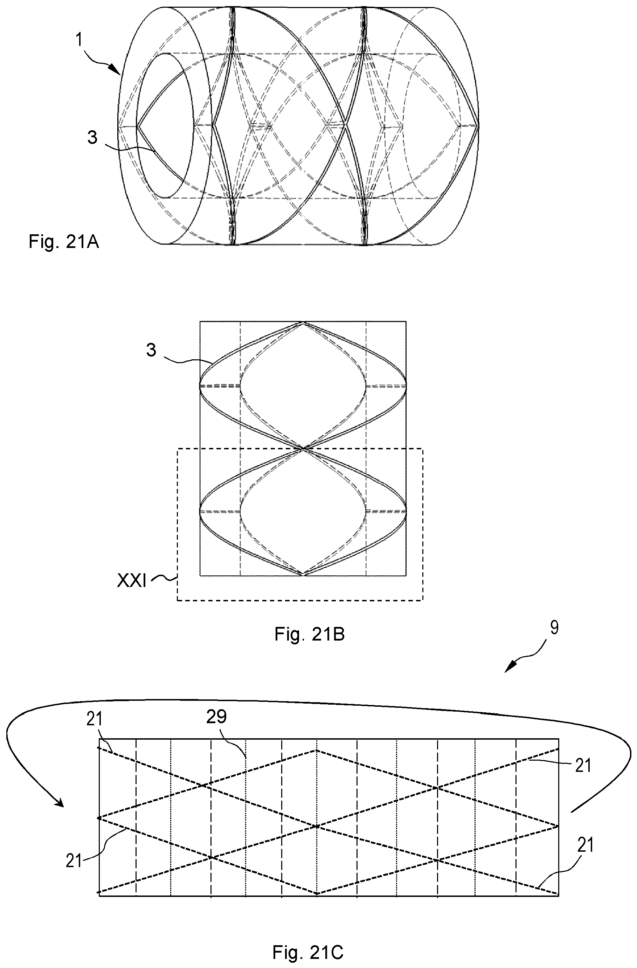

In Fig. 21A - Fig. 21C ist eine zwölfte Ausführungsform gezeigt, bei der sich vier Klebstoffwände 3 spiralförmig entlang der Höhe des zylinderförmigen Filterelements 1 erstrecken. Von einer gemeinsamen Faltenkante 16A, 16B beginnen jeweils zwei Klebstoffwände 3 mit entgegengesetztem Umlaufsinn zueinander. Die Klebstoffwände 3 erstrecken sich über die Höhe des zylinderförmigen Filterelements 1. Der Verlauf der Klebstoffwände 3 ist durch die in Fig. 21C dargestellten Klebelinien 21 illustriert. Dabei ist der Verlauf der Klebstoffwände 3 auf den in Fig. 21B markierten Ausschnitt XXI begrenzt gezeichnet.

Die vorgeschlagenen Verklebungen von Faltabschnitten im Inneren des jeweiligen Filterelements erlauben eine an die jeweilige Einbau- und Strömungssituation angepasste Stabilisierung der einzelnen Falten und des gesamten Faltenpacks oder Faltenbalgs. Gleichzeitig kann durch den flexiblen Einsatz von Klebstoffwänden eine innere Strömungsführung verändert werden. Insgesamt lässt sich eine verbesserte Filterleistung in der jeweiligen Anwendungssituation erzielen.

## Patentansprüche

1. Filterelement (1) zum Filtern eines Fluids, insbesondere zum Filtern von Verbrennungsluft in einem Kraftfahrzeug und/oder zum Filtern von Betriebsmitteln eines Kraftfahrzeugs, mit einem Faltenpack (2) mit einer Anströmseite (2A) und einer Abströmseite (2B), wobei das Faltenpack (2) aus einem zickzackförmig gefalteten Filtermedium (9) gebildet ist und eine Höhe (h) zwischen der Anströmseite (2A) und der Abströmseite (2B) aufweist, wobei innerhalb des Faltenpacks (2) mindestens eine aus einem Klebstoffmaterial (24) gebildete Klebstoffwand (3) verläuft, welche durch Verklebungen (23) direkt benachbarter Faltabschnitte (22A, 22B) gebildet ist, wobei die Klebstoffwand (3) in Richtung der Höhe (h) schräg und/oder gekrümmt verläuft.

2. Filterelement nach Anspruch1, wobei das Filterelement (1) eine Breite (b) entlang der Faltkanten (16), eine quer zu der Breite (b) verlaufende Länge (l) und eine Höhe (h), aufweist, und die Klebstoffwand (3) das Faltenpack (2) in der Breite in Faltenpackabschnitte (27) teilt.

3. Filterelement nach Anspruch 1 oder 2, wobei die Klebstoffwand (3) in Richtung der Länge (l) schräg und/oder gekrümmt verläuft.

4. Filterelement nach einem der vorhergehenden Ansprüche, wobei eine Höhe der Klebstoffwand (3) zumindest abschnittsweise geringer ist als die Höhe (h) des Filterelements (1).

5. Filterelement nach einem der vorhergehenden Ansprüche, wobei sich die Klebstoffwand (3) zwischen der Anströmseite (2A) und der Faltkante (16) der Abströmseite (25) des Filterelements (1) oder zwischen der Abströmseite (2B) und der Faltenkante (16) der Anströmseite (2A) des Filterelements (1) erstreckt und die Anströmseite (2A) und die Abströmseite (2B) insbesondere miteinander verbindet.

6. Filterelement nach Anspruch 5, wobei die Klebstoffwand (3) eine anströmseitige Kante (3A) und eine abströmseitige Kante (3B) umfasst, wobei die anströmseitige Kante (3A) eine Anströmfläche (A1) des Filterelements (1) in der Breite begrenzt, und die abströmseitige Kante (3B) eine Abströmfläche (A2) des Filterelements (1) in der Breite begrenzt und/oder , wobei die Anströmfläche (A1) des Filterelements (1) und die Abströmfläche (A2) des Filterelements (1) eine unterschiedliche Größe und/oder Geometrie haben.

7. Filterelement nach einem der vorhergehenden Ansprüche, wobei die Klebstoffwand (3) als Strömungsleitelement im Inneren des Faltenpacks (2) ausgebildet ist und/oder wobei die Klebstoffwand (3) einen Reinfluidbereich von einem Rohfluidbereich abtrennt und/oder wobei die Klebstoffwand (3) wenigstens abschnittsweise entlang der Höhe (h) einen Winkel (α) zwischen 5° und nahe 90°, vorzugsweise zwischen 10° und 45°, besonders bevorzugt zwischen 10° und 30°, mit einer Flächennormalen (N) der Anström- oder Abströmseite (2A, 2B) einschließt und/oder wobei die Klebstoffwand (3) entlang der Länge des Filterelements (1) unterbrochen ist und/oder von einer Stirnseite (19, 20) des Filterelements (1) beabstandet ist.

8. Filterelement nach einem der vorhergehenden Ansprüche, wobei die Klebstoffwand (3) in dem Faltenpack (2) eine geschlossene Form hat und/oder wobei die Klebstoffwand (3) das Faltenpack (2) seitlich fluiddicht abdichtet und/oder wobei mehrere, insbesondere sich schneidende oder berührende, Klebstoffwände (3) vorgesehen sind.

9. Filterelement nach Anspruch 8, wobei die Breite des Filterelements (1) entlang der Länge gleichmäßig durch Abstände zwischen den Klebstoffwänden (3) und Abständen zwischen den Klebstoffwänden (3) und Seiten des Filterelements (1) aufgeteilt ist.

10. Filterelement nach einem der vorherigen Ansprüche, wobei das Faltenpack (2) zu einem zylinderförmigen Endlosfaltenbalg gebogen ist.

11. Filterelement nach einem der vorherigen Ansprüche, wobei das Klebstoffmaterial (24) lösemittelhaltige Nassklebstoffe, Kontaktklebstoffe, Dispersionsklebstoffe, Schmelzklebstoffe, Plastisole, Polyadditionsklebstoffe, Polykondensationsklebstoffe, Polymerisationsklebstoffe oder Haftklebstoffe umfasst.

12. Verfahren zum Herstellen eines Filterelements (1) nach einem der vorherigen Ansprüche mit den Schritten:
a. Bereitstellen eines flachen Filtermediums (9);
b. Auftragen eines viskosen Klebstoffmaterials (24) entlang einer vorgegebenen Klebelinie (21);
c. Falten des Filtermediums (9) entlang vorgegebener Faltlinien (16), durch welche benachbarte Faltabschnitte (22A, 22B) begrenzt werden, zum Ausbilden von zwischen den Faltabschnitten (22A, 22B) vorliegenden Faltkanten (16A); und
d. Aushärten des Klebstoffmaterials (24) zum Ausbilden einer Verklebung (23) zwischen benachbarten Faltabschnitten (22A, 22B);
wobei das Klebstoffmaterial (24) derart auf die Klebelinie (21) aufgetragen wird, dass die Klebelinie (21) zumindest abschnittsweise schräg zu oder entlang der zwischen den jeweils benachbarten Faltabschnitten (22A, 22B) liegenden Faltlinie (16A) versetzt verläuft.

13. Verfahren nach Anspruch 12, wobei das Klebstoffmaterial (24) in einem fließfähigen Zustand aufgetragen wird und/oder wobei das Klebstoffmaterial (24) mithilfe einer entlang der Faltlinien (16) verschiebbaren Auftragsdüse (31), insbesondere durch kontinuierliches Extrudieren, aufgetragen wird.

14. Verfahren nach einem der Ansprüche 12 - 13, wobei das Auftragen des Klebstoffmaterials (24) zumindest abschnittweise entlang der Klebelinien (21) unterbrochen wird.

15. Verfahren nach einem der vorherigen Ansprüche 12 - 14, wobei das Klebstoffmaterial (24) gleichzeitig entlang unterschiedlicher Klebelinien (21) aufgetragen wird.

## Claims

1. A filter element (1) for filtering a fluid, in particular for filtering combustion air in a motor vehicle and/or for filtering operating means of a motor vehicle, having a pleated pack (2) with an upstream side (2A) and an downstream side (2B), wherein the pleated pack (2) is formed from a zigzag-folded filter medium (9) and features a height (h) between the upstream side (2A) and the downstream side (2B), wherein at least one adhesive wall (3) formed from an adhesive material (24) extends within the pleated pack (2), which adhesive wall is formed by adhesive bonds (23) between directly adjacent fold sections (22A, 22B), wherein the adhesive wall (3) extends obliquely and/or curved in the direction of the height (h).

2. The filter element according to claim 1, wherein the filter element (1) features a width (b) along the fold edges (16), a length (I) extending transversely to the width (b) and a height (h), and the adhesive wall (3) divides the pleated pack (2) in width into pleated pack sections (27).

3. The filter element according to claim 1 or 2, wherein the adhesive wall (3) extends obliquely and/or curved in the direction of the length (I).

4. The filter element according to one of the preceding claims, wherein a height of the adhesive wall (3) is at least in sections less than the height (h) of the filter element (1).

5. The filter element according to one of the preceding claims, wherein the adhesive wall (3) extends between the upstream side (2A) and the fold edge (16) of the downstream side (25) of the filter element (1) or between the downstream side (2B) and the fold edge (16) of the upstream side (2A) of the filter element (1) and in particular connects the upstream side (2A) and the downstream side (2B) to each other.

6. The filter element according to claim 5, wherein the adhesive wall (3) comprises an upstream side edge (3A) and a downstream side edge (3B), wherein the upstream side edge (3A) limits the width of an inflow surface (A1) of the filter element (1), and the downstream edge (3B) limits the width of an outflow surface (A2) of the filter element (1), and/or wherein the inflow surface (A1) of the filter element (1) and the outflow surface (A2) of the filter element (1) have a different size and/or geometry.

7. The filter element according to one of the preceding claims, wherein the adhesive wall (3) is designed as a flow guiding element inside the pleated pack (2) and/or wherein the adhesive wall (3) separates a clean fluid area from a raw fluid area and/or wherein the adhesive wall (3) forms an angle (α) between 5° and close to 90°, preferably between 10° and 45°, at least in sections along the height (h), particularly preferably between 10° and 30°, with a surface normal (N) of the upstream or downstream side (2A, 2B) and/or wherein the adhesive wall (3) is interrupted along the length of the filter element (1) and/or is spaced apart from a front face (19, 20) of the filter element (1).

8. The filter element according to one of the preceding claims, wherein the adhesive wall (3) has a closed shape in the pleated pack (2) and/or wherein the adhesive wall (3) seals the pleated pack (2) laterally in a fluid-tight manner and/or wherein a plurality of adhesive walls (3), in particular intersecting or contacting adhesive walls (3), are provided.

9. The filter element according to claim 8, wherein the width of the filter element (1) is divided evenly along the length by distances between the adhesive walls (3) and distances between the adhesive walls (3) and sides of the filter element (1).

10. The filter element according to one of the preceding claims, wherein the pleated pack (2) is bent into a cylindrical endless pleated bellows.

11. The filter element according to one of the preceding claims, wherein the adhesive material (24) comprises solvent-based wet adhesives, contact adhesives, dispersion adhesives, hot melt adhesives, plastisols, polyaddition adhesives, polycondensation adhesives, polymerization adhesives, or pressure-sensitive adhesives.

12. A method for manufacturing a filter element (1) according to one of the preceding claims, comprising the steps of:
a. providing a flat filter medium (9);
b. applying a viscous adhesive material (24) along a predetermined adhesive line (21);
c. folding the filter medium (9) along predetermined fold lines (16) defining adjacent fold sections (22A, 22B) to form fold edges (16A) between the fold sections (22A, 22B); and
d. curing the adhesive material (24) to form an adhesive bond (23) between adjacent fold sections (22A, 22B);
wherein the adhesive material (24) is applied to the adhesive line (21) such that the adhesive line (21) runs at least in sections obliquely to or along the fold line (16A) lying between the respective adjacent fold sections (22A, 22B).

13. The method according to claim 12, wherein the adhesive material (24) is applied in a flowable state and/or wherein the adhesive material (24) is applied by means of an application nozzle (31) that can be moved along the fold lines (16), in particular by continuous extrusion.

14. The method according to one of the claims 12 to 13, wherein the application of the adhesive material (24) is interrupted at least in sections along the adhesive lines (21).

15. The method according to one of the preceding claims 12 to 14, wherein the adhesive material (24) is applied simultaneously along different adhesive lines (21).

## Revendications

1. Élément filtrant (1) destiné au filtrage d'un fluide, notamment au filtrage d'air de combustion dans un véhicule automobile et/ou au filtrage de carburants d'un véhicule automobile, ayant un ensemble de plis (2) avec un côté amont(2A) et un côté aval (2B), l'ensemble de plis (2) étant constitué d'un milieu filtrant (9) plié en accordéon et présentant une hauteur (h) entre le côté amont (2A) et le côté aval (2B), au moins une paroi adhésive (3) réalisée dans un matériau adhésif (24) s'étendant à l'intérieur de l'ensemble de plis (2) et étant formée par des collages (23) de sections de pliage (22A, 22B) directement adjacentes, la paroi adhésive (3) s'étendant de manière inclinée et/ou courbée dans le sens de la hauteur (h).

2. Élément filtrant selon la revendication 1, l'élément filtrant (1) présentant une largeur (b) le long des arêtes de pliage (16), une longueur (l) perpendiculaire à la largeur (b) et une hauteur (h), et la paroi adhésive (3) divisant l'ensemble de plis (2) en largeur en sections d'ensemble de plis (27).

3. Élément filtrant selon la revendication 1 ou 2, la paroi adhésive (3) étant inclinée et/ou courbée dans le sens de la longueur (l).

4. Élément filtrant selon l'une quelconque des revendications précédentes, une hauteur de la paroi adhésive (3) étant, au moins sur certaines sections, inférieure à la hauteur (h) de l'élément filtrant (1).

5. Élément filtrant selon l'une quelconque des revendications précédentes, la paroi adhésive (3) s'étendant entre le côté amont (2A) et le bord de pliage (16) du côté aval (25) de l'élément filtrant (1) ou entre le côté aval (2B) et le bord de pliage (16) du côté amont (2A) de l'élément filtrant (1) et reliant en particulier le côté amont (2A) et le côté aval (2B) l'un à l'autre.

6. Élément filtrant selon la revendication 5, la paroi adhésive (3) comprenant un bord du côté amont (3A) et un bord du côté aval (3B), le bord du côté amont (3A) délimitant en largeur une surface d'afflux (A1) de l'élément filtrant (1), et le bord du côté aval (3B) délimitant en largeur une surface d'écoulement (A2) de l'élément filtrant (1), et/ou la surface d'afflux (A1) de l'élément filtrant (1) et la surface d'écoulement (A2) de l'élément filtrant (1) ayant une taille et/ou une géométrie différente.

7. Élément filtrant selon l'une quelconque des revendications précédentes, la paroi adhésive (3) étant exécutée en tant qu'élément de guidage du flux à l'intérieur de l'ensemble de plis (2), et/ou la paroi adhésive (3) séparant une zone à fluide pur d'une zone à fluide brut et/ou la paroi adhésive (3) formant, au moins sur certaines sections, le long de la hauteur (h), un angle (α) compris entre 5° et près de 90°, de préférence entre 10° et 45°, de façon particulièrement préférée entre 10° et 30°, avec une normale de surface (N) du côté amont ou du côté aval (2A, 2B), et/ou la paroi adhésive (3) étant interrompue le long de la longueur de l'élément filtrant (1) et/ou étant espacée d'une face frontale (19, 20) de l'élément filtrant (1).

8. Élément filtrant selon l'une quelconque des revendications précédentes, la paroi adhésive (3) ayant une forme fermée dans l'ensemble de plis (2), et/ou la paroi adhésive (3) assurant l'étanchéité latérale aux fluides de l'ensemble de plis (2) et/ou plusieurs parois adhésives (3), en particulier se croisant ou se touchant, étant prévues.

9. Élément filtrant selon la revendication 8, la largeur de l'élément filtrant (1) étant répartie uniformément sur toute la longueur par des espaces entre les parois adhésives (3) et des espaces entre les parois adhésives (3) et les côtés de l'élément filtrant (1).

10. Élément filtrant selon l'une quelconque des revendications précédentes, l'ensemble de plis (2) étant courbé pour former un soufflet sans fin cylindrique.

11. Élément filtrant selon l'une quelconque des revendications précédentes, le matériau adhésif (24) comprenant des adhésifs humides à base de solvant, des adhésifs de contact, des adhésifs en dispersion, des adhésifs thermofusibles, des plastisols, des adhésifs de polyaddition, des adhésifs de polycondensation, des adhésifs de polymérisation ou des colles auto-adhésives.

12. Procédé de fabrication d'un élément filtrant (1) selon l'une quelconque des revendications précédentes comprenant les étapes suivantes:
a. mise à disposition d'un milieu filtrant plat (9);
b. application d'un matériau adhésif visqueux (24) le long d'une ligne de collage prédéfinie (21);
c. pliage du milieu filtrant (9) le long de lignes de pliage prédéfinies (16) qui délimitent des sections de pliage adjacentes (22A, 22B) afin de former des arêtes de pliage (16A) situés entre les sections de pliage (22A, 22B); et
d. durcissement du matériau adhésif (24) pour former un collage (23) entre des sections de pliage adjacentes (22A, 22B);
le matériau adhésif (24) étant appliqué sur la ligne de collage (21) de sorte que la ligne de collage (21) évolue, au moins sur certaines sections, en biais par rapport à la ligne de pliage (16A) située entre les sections de pliage adjacentes respectives (22A, 22B) ou le long de ladite ligne de pliage.

13. Procédé selon la revendication 12, le matériau adhésif (24) étant appliqué à l'état fluide et/ou le matériau adhésif (24) étant appliqué à l'aide d'une buse d'application (31) mobile le long des lignes de pliage (16), en particulier par extrusion continue.

14. Procédé selon l'une quelconque des revendications 12 à 13, l'application du matériau adhésif (24) étant interrompue, au moins sur certaines sections, le long des lignes de collage (21).

15. Procédé selon l'une quelconque des revendications 12 à 14, le matériau adhésif (24) étant appliqué simultanément le long de différentes lignes de collage (21).
